# EUROPÄISCHE PATENTSCHRIFT

(11) **EP 1 400 733 B1**
(45) Veröffentlichungstag und Bekanntmachung des Hinweises auf die Patenterteilung: **13.08.2008**
(21) Anmeldenummer: 03018965.8
(22) Anmeldetag: 21.08.2003
(51) Int. Cl.: F16H 61/28, F16H 3/00

(54) **Hydraulische Steuerungsvorrichtung eines Doppelkupplungsgetriebes**
Hydraulic control apparatus of a double clutch gearbox
Dispositif de commande hydraulique d'une boîte de vitesses à double embrayage

(30) Priorität: 18.09.2002 DE 10243282
(43) Veröffentlichungstag der Anmeldung: 24.03.2004
(73) Patentinhaber: Volkswagen Aktiengesellschaft, 38436 Wolfsburg (DE)
(72) Erfinder: Adomeit, Carsten, Dr., 30173 Hannover (DE); Kruse, Georg, 38518 Gifhom (DE); Nicke, Dirk, 38106 Braunschweig (DE)

(56) Entgegenhaltungen:
- DE-A1- 4 320 353
- DE-A1- 10 020 187
- DE-C1- 4 117 736
- US-A- 5 992 590
- PATENT ABSTRACTS OF JAPAN Bd. 007, Nr. 207 (M-242), 13. September 1983 (1983-09-13) -& JP 58 102851 A (TOYO KOGYO KK), 18. Juni 1983 (1983-06-18)

## Beschreibung

Die Erfindung betrifft eine hydraulische Steuerungsvorrichtung eines Doppelkupplungsgetriebes, das aus zwei Teilgetrieben mit jeweils einer aktiv schließbaren Motorkupplung und mehreren über sperrsynchronisierte Gangschaltkupplungen schaltbaren Gängen besteht, wobei die Steuerungsvorrichtung eine Druckversorgungseinrichtung mit einer Systemdruckleitung und einer Ölsumpfleitung und jeweils für jedes der beiden Teilgetriebe einen mit der Druckversorgungseinrichtung verbundenen Steuerungszweig mit hydraulischen Stellantrieben, einem Kupplungssteller und mehreren Gangstellern, und den Stellantrieben zugeordneten Magnetsteuerungsventilen umfasst.

Bei technischen Anlagen, Maschinen, und Fahrzeugen werden hydraulische Stellantriebe, die zumeist als hydraulische Stellzylinder ausgebildet sind, aufgrund hoher realisierbarer Stellkräfte und Stellgeschwindigkeiten verbunden mit kompakten Abmessungen und guter Steuerbarkeit für unterschiedliche Zwecke verwendet, u.a. bei automatisiert steuerbaren Kraftfahrzeuggetrieben als Kupplungssteller zur Betätigung einer Motorkupplung und als Gangsteller zum Ein- und Auslegen von Gängen. Zur Steuerung der Stellantriebe ist diesen im einfachsten Fall, d.h. bei Verwendung eines einfachwirkenden Stellzylinders mit einem einzigen einseitig auf einen Stellkolben wirksamen Druckraum, jeweils ein Magnetsteuerungsventil (Proportional- oder Schieberventil) einer hydraulischen Steuerungsvorrichtung vorgeschaltet, durch das der in dem Druckraum herrschende Druckmitteldruck und der in den Druckraum einströmende bzw. aus diesem ausströmende Druckmittelvolumenstrom und damit die von dem Stellantrieb ausgeübte Stellkraft und die Stellgeschwindigkeit steuerbar sind. Bei Verwendung von doppeltwirkenden Stellzylindern mit zwei gegensinnig auf einen Stellkolben wirksamen Druckräumen kann je nach Anwendung jedem oder nur einem der beiden Druckräume ein Magnetsteuerungsventil zugeordnet sein.

Für die Schaltsteuerung eines einfachen automatisierten Schaltgetriebes (ASG), das abgesehen von der automatisierten Schaltbetätigung im Aufbau einem manuell schaltbaren Kraftfahrzeuggetriebe gleicht, sind entsprechende hydraulische Steuerungsvorrichtungen in unterschiedlicher Ausbildung bekannt. In den zu Grunde liegenden Steuerungsvorrichtungen der EP 0 477 564 A2, der EP 0 933 564 A2, und der DE 199 31 973 A1 werden jeweils zwei doppeltwirkende Stellzylinder als Gangsteller verwendet, der eine als Wählsteller zur Wahl der Schaltgasse, d.h. der getriebeinternen Verbindung einer Schaltwelle mit einer von mehreren Schaltstangen, und der andere als Schaltsteller zum Ein- und Auslegen der der gewählten Schaltstange zugeordneten Gänge, d.h. dem Schließen und Öffnen einer von zumeist zwei Gangschaltkupplungen. Vorliegend sind die den Gangstellern zugeordneten Magnetsteuerungsventile als Proportional-Durchflussventile ausgebildet. Aus der DE 297 14 652 U1 und der DE 198 49 488 A1 sind ähnliche Steuerungsvorrichtungen eines ASG bekannt, bei denen jeweils die dem Schaltsteller zugeordneten Magnetsteuerungsventile als Proportional-Druckregelventile ausgebildet sind.

Bei der Verwendung eines einzigen Steuerungsventils zur Steuerung des Druckes und des ein- oder ausfließenden Volumenstromes eines hydraulischen Stellantriebes tritt bekanntlich eine starke Wechselwirkung zwischen dem die Stellkraft bildenden Druck und dem die Stellgeschwindigkeit bildenden Volumenstrom auf. Ein Durchflussventil erlaubt zwar die Einstellung der Durchflussmenge durch die Einstellung eines definierten Öffnungsquerschnittes, lässt aber keine exakte Kontrolle des dabei entstehenden Druckes in der ausgangsseitigen Arbeitsleitung und dem angeschlossenen Druckraum zu. Zudem ist die Durchflussmenge von der Druckdifferenz über dem Steuerungsventil, die von einem im allgemeinen veränderlichen Versorgungsdruck beeinflusst wird, und von der auf den Stellantrieb wirksamen Widerstandskraft abhängig. Dagegen erlaubt ein Druckregelventil die feinfühlige Verstellung des in der angeschlossenen Arbeitsleitung wirksamen Druckes. Der in die Arbeitsleitung abgegebene Volumenstrom ist aber von dem auf den Stellantrieb wirksamen Widerstandskraft abhängig und kann somit nicht exakt vorausbestimmt werden. Somit ist eine exakte Steuerung von Kupplungs- und Gangstellern, insbesondere bei schnellen Wechseln der Stellkraft und / oder der Stellgeschwindigkeit, mit einem einzigen Steuerungsventil pro Druckraum nicht möglich.

Aus der DE 199 21 301 A1 und der WO 97/05410 sind jeweils eine hydraulische Steuerungsvorrichtung eines ASG bekannt, bei der jedem der Gangsteller, einem Wählsteller und einem Schaltsteller, jeweils unmittelbar ein als Durchflussventil ausgebildetes Magnetsteuerungsventil vorgeschaltet und den beiden Magnetsteuerungsventilen ein gemeinsames Druckregelventil vorgeschaltet ist. In der DE 199 21 301 A1 erfolgt die Druckregelung des Druckregelventils durch eine Rückführung des ausgangsseitigen Druckes über einen Druckwandler und ein elektronisches Steuergerät auf den Steuerungsmagneten des Druckregelventils, in der WO 97/05410 dagegen durch eine Rückführung des ausgangsseitigen Druckes unmittelbar auf den Steuerkolben des Druckregelventils. Durch die vorgeschlagene Serienschaltung des Druckregelventils und des Durchflussventils zur Steuerung der Gangsteller wird eine Verbesserung des Steuerungsverhaltens hinsichtlich des Ansprechverhaltens und der Kraftdosierung erreicht.

Ein Doppelkupplungsgetriebe, dessen Bauart beispielsweise aus der DE 35 46 454 A1 seit längerem bekannt ist, unterscheidet sich aber wesentlich von einem ASG, und zwar sowohl im Aufbau als auch in der Funktionsweise. Das Doppelkupplungsgetriebe weist u.a. eine erste Motorkupplung, eine erste Getriebeeingangswelle, und eine erste Gruppe von Gängen, die ein erstes Teilgetriebe bilden, und eine zweite Motorkupplung, eine zweite Getriebeeingangswelle, und eine zweite Gruppe von Gängen auf, die ein zweites Teilgetriebe bilden. Die beiden Motorkupplungen und die beiden Getriebeeingangswellen sind im allgemeinen platzsparend koaxial angeordnet, wobei sich die Motorkupplungen zumeist in einem gemeinsamen Kupplungskorb befinden. Bei der üblichen wechselweisen Zuordnung der Gänge, bei der dem einen Teilgetriebe die geraden Gänge und dem anderen Teilgetriebe die ungeraden Gänge zugeordnet sind, besteht ein normaler sequenzieller Schaltvorgang von einem eingelegten alten Gang in einen nächsthöheren oder nächstniedrigeren, jeweils dem anderen Teilgetriebe zugeordneten neuen Gang zunächst in einem Öffnen der dem Teilgetriebe des neuen Gangs zugeordneten Motorkupplung, in einem Einlegen des neuen Gangs, und in einem anschließenden überschnittenen Öffnen der dem Teilgetriebe des alten Gangs zugeordneten Motorkupplung und Schließen der dem Teilgetriebe des neuen Gangs zugeordneten Motorkupplung. Die Kraftübertragung erfolgt also wechselweise über das erste Teilgetriebe mit der ersten Motorkupplung und der ersten Getriebeeingangswelle und über das zweite Teilgetriebe mit der zweiten Motorkupplung und der zweiten Getriebeeingangswelle, wobei als besonderer Vorteil während eines Gangwechsels keine Zug- oder Schubkraftunterbrechung auftritt. Aufgrund der Komplexität derartiger Schaltvorgänge sind Doppelkupplungsgetriebe soweit bekannt automatisiert ausgebildet, wobei aufgrund der überschnittenen Betätigung der Motorkupplungen im Gegensatz zu einem ASG eine exakte Steuerung der zugeordneten Kupplungssteller erforderlich ist.

Aus der DE 41 17 736 C1 ist eine Steuerungsvorrichtung für ein Doppelkupplungsgetriebe bekannt, bei dem die einzelnen Steuerzweige funktional für Kupplungssteller einerseits und Gangsteller andererseits unterschieden werden. Im Steuerzweig für die Gangsteller ist den Durchflussventilen, die jedem Gangsteller zugeordnet sind, ein gemeinsames 8/5-Wegeventil zur Drucksteuerung vorgeschaltet. Nachteilig hierbei ist zum einen die komplexe Ansteuerung des Druckventils. Zum anderen ist keine unabhängige Drucksteuerung in den Teilgetrieben des Doppelkupplungsgetriebes gegeben.

Die gattungsgemäße JP 58102851 offenbart ein Doppelkupplungsgetriebe mit einem Auswahlventil, das die Zuführung von Hydraulikflüssigkeit zu einer Auswahl nachgeordneter Stellantrieben steuert je nachdem, ob mittels eines Wahlhebels die Vorwärts- oder die Rückwärtsrichtung angewählt wurde. Das Auswahlventil steuert die hydraulische Ankopplung einer Hydraulikquelle an drei Steuerungszweige, von denen ein erster zwei Kupplungssteller, ein zweiter zwei Gangsteller und ein dritter einen einzelnen Rückwärtsgangsteller umfasst.

Die DE 100 20 187 A1 offenbart eine Steuerungsvorrichtung für ein Doppelkupplungsgetriebe mit einem Niederdruckzweig zur Schmierung und Kühlung und einem separaten Hochdruckzweig zur Ansteuerung von Stellantrieben. Der Hochdruckkreis enthält dabei eine Reihenschaltung von komplexen Durchflussventilen, die die Ansteuerung von Kupplungsstellern und Gangstellern kombinieren. Nachteilig hierbei ist die komplizierte, erforderliche Steuerung der komplexen Ventile sowie die fehlende exakt Drucksteuerung.

Die US 5,992,590 A sowie die DE 43 20 353 A1 offenbaren alternative ASG-Steuerungen.

Es ist daher Aufgabe der vorliegenden Erfindung, eine hydraulische Steuerungsvorrichtung für ein Doppelkupplungsgetriebe der eingangs genannten Art anzugeben, mit der bei möglichst einfachem und kostengünstigem Aufbau eine gute Steuerbarkeit, insbesondere im Hinblick auf schnelle Änderungen der in den Kupplungs-und Gangstellern wirksamen Stellkräfte und Stellgeschwindigkeiten, gegeben ist.

Diese Aufgabe wird erfindungsgemäß in Verbindung mit dem Oberbegriff des Anspruches 1 dadurch gelöst, dass den Durchflussventilen in mindestens einem der Steuerungszweige ein gemeinsames Druckregelventil vorgeschaltet ist, wobei das gemeinsame Druckregelventil als ein 3/3-Wege-Proportionalventil mit zwei Eingängen und einem Ausgang mit Ausgangsdruckregelung ausgebildet ist, bei dem ein erster Eingang mit der Systemdruckleitung, ein zweiter Eingang mit der Ölsumpfleitung, und der Ausgang über eine verzweigte Zuleitung mit den Durchflussventilen in Verbindung steht, und bei dem in einer auch als Ruhestellung wirksamen ersten Endstellung die Zuleitung ungedrosselt mit der Ölsumpfleitung verbunden und die Systemdruckleitung abgesperrt ist, in einer Mittelstellung die Eingänge und der Ausgang abgesperrt sind, und in einer zweiten Endstellung die Systemdruckleitung ungedrosselt mit der Zuleitung verbunden und die Ölsumpfleitung abgesperrt ist.

Vorteilhafte Ausgestaltungen der erfindungsgemäßen Steuerungsvorrichtung sind in den Unteransprüchen 2 bis 15 angegeben.

Durch die in dem jeweiligen Steuerungszwelg für die Gangsteller und den Kupplungssteller wirksame Serienschaltung des Druckregelventils mit dem jeweiligen Durchflussventil wird eine optimale Steuerbarkeit der Stellantriebe erreicht. Mittels der Durchflussventile wird im wesentlichen die Stellgeschwindigkeit des betreffenden Stellantriebes gesteuert, mittels des gemeinsamen Druckregelventils die jeweilige Stellkraft. Dabei ergibt sich eine deutliche Steigerung der Steuerungsgenauigkeit dadurch, dass der durch das Durchflussventil bestimmte Druckmittelvolumenstrom bei einem bekannten, durch das vorgeschaltete Druckregelventil eingestellten Druck in der Zulaufleitung wesentlich exakter einstellbar ist als mit einem einzigen Steuerungsventil. Andererseits kann das Durchflussventil bei einem plötzlichen Abfall der Widerstandskraft im gesteuerten Stellantrieb zur Volumenstrombegrenzung und damit zur Vermeidung einer ungewollten Beschleunigung des Stellantriebes genutzt werden. Bei den Gangstellern Ist somit beim Einlegen eines Ganges ein schnelles Heranfahren mit niedriger Stellkraft aus einer Neutralstellung bis zum Anlegen der Synchronringe, anschließend das Synchronisieren mit hoher Stellkraft und praktisch verschwindender Stellgeschwindigkeit, und schließlich nach erreichtem Synchronlauf und Überwinden der Sperrverzahnung das Schließen der Klauenkupplung der Gangschaltkupplung mit moderater Stellgeschwindigkeit und geringer Stellkraft möglich. Insbesondere in der letzten Phase kann durch ein rechtzeitiges Zufahren des Durchflussventils der Volumenstrom gedrosselt und somit eine ungewollte Beschleunigung des Gangstellers beim Schließen der Klauenkupplung, die mit einem geräuschvollen und verschleißintensiven Anschlagen der Klauenkupplung oder der betreffenden Schaltschiene verbunden wäre, verhindert werden. Auch die Kupplungssteller sind durch die erfindungsgemäße Ventilanordnung feinfühlig steuerbar. Bei einem Schaltvorgang kann damit die Kupplungskapazität der dem neuen Gang zugeordneten Motorkupplung exakt entsprechend dem Abbau der Kupplungskapazität der dem alten Gang zugeordneten Motorkupplung erhöht werden, so dass ein abtriebsseitiger Drehmomenteinbruch aufgrund unangepasster Kupplungskapazitäten vermieden wird. Aufgrund der Verwendung von aktiv schließbaren Motorkupplungen, die durch die Kupplungssteller jeweils gegen die Rückstellkraft einer Ausrückfeder schließbar sind, werden der Kupplungssteller und die Gangsteller jedes der Teilgetriebe jeweils asynchron betätigt. Dadurch ist die kostengünstige Verwendung eines gemeinsamen Druckregelventils pro Steuerungszweig möglich und zur Vereinfachung der Steuerungsvorrichtung auch sinnvoll. Als Nebeneffekt sorgt die Serienanordnung der beiden Steuerungsventile für eine zusätzliche Absicherung im Störungsfall. Bleibt nämlich eines der Steuerungsventile in einer druckführenden geöffneten Stellung stehen, so kann das jeweils andere Steuerungsventil, wenn auch mit deutlich schlechteren Steuerungseigenschaften, die Funktion des gestörten Steuerungsventils, z.B. zur Durchführung von Notfunktionen, mit übernehmen.

Zur weiteren Vereinfachung des Aufbaus der Steuerungsvorrichtung kann den Gangstellern in einem der Steuerungszweige auch ein gemeinsames Durchflussventil zugeordnet sein, dem dann je nach Ausbildung der verwendeten Gangsteller und des Durchflussventils zum Wechsel des aktiven Gangstellers und/oder zur Umkehrung der Bewegungsrichtung des aktiven Gangstellers ein Umschaltventil vor- oder nachgeschaltet sein kann.

Da Proportionalventile nicht vollständig dicht schließen, sondern jeweils eine druck- und verschleißabhängige Restleckage aufweisen, kann zur Vermeidung leckagebedingter Fehlbewegungen eines der deaktivierten Gangsteller anstelle eines Umschaltventils jedem der Gangsteller ein separates Absperrschaltventil vorgeschaltet sein. Die Absperrschaltventile sind vorteilhaft als Sitzventile ausgebildet, die im geschlossenen Zustand den Anschluss des jeweiligen Gangstellers vollständig dicht von der betreffenden Druckversorgungsleitung trennen.

Andererseits kann auch anstelle des gemeinsamen Durchflussventils jedem der Gangsteller jeweils ein separates Durchflussschaltventil vorgeschaltet sein, das vorteilhaft als getaktetes Sitzventil ausgebildet ist, dessen Volumenstrom bei konstanter Schaltfrequenz mittels der Taktrate, d.h. dem Verhältnis aus Öffnungs- und Schließzeit, steuerbar ist.

Als weitere Sicherheitsvorkehrung gegen unerwünschte Bewegungen der Stellantriebe können die Steuerungszweige zur Aktivierung und Deaktivierung jeweils eingangsseitig mit einem Abschaltventil versehen sein, das relativ preiswert ist und mittels dem der betreffende Steuerungszweig im Zulauf durch die Herstellung einer Verbindung mit der Systemdruckleitung aktivierbar und durch eine Verbindung mit der Ölsumpfleitung deaktivierbar ist.

Die weitere Ausgestaltung der erfindungsgemäßen Steuerungsvorrichtung ist wesentlich von der Bauart der verwendeten Stellantriebe und von der Ausbildung und Anordnung der zugeordneten Steuerungsventile abhängig. Daher werden weitere Ausgestaltungsmerkmale anhand der nachfolgenden ausführlichen Beschreibung der beigefügten Zeichnungen erläutert, in denen beispielhaft, jeweils in schematischer Form, mehrere Ausführungen der erfindungsgemäßen hydraulischen Steuerungsvorrichtung dargestellt sind. Hierzu zeigen:
- Fig. 1: eine erste Ausführung der Steuerungsvorrichtung,
- Fig. 2: eine zweite Ausführung der Steuerungsvorrichtung,
- Fig. 3: eine dritte Ausführung der Steuerungsvorrichtung,
- Fig. 4: eine vierte Ausführung der Steuerungsvorrichtung,
- Fig. 5: eine fünfte Ausführung der Steuerungsvorrichtung,
- Fig. 6: eine sechste Ausführung der Steuerungsvorrichtung und
- Fig. 7: eine siebte Ausführung der Steuerungsvorrichtung.

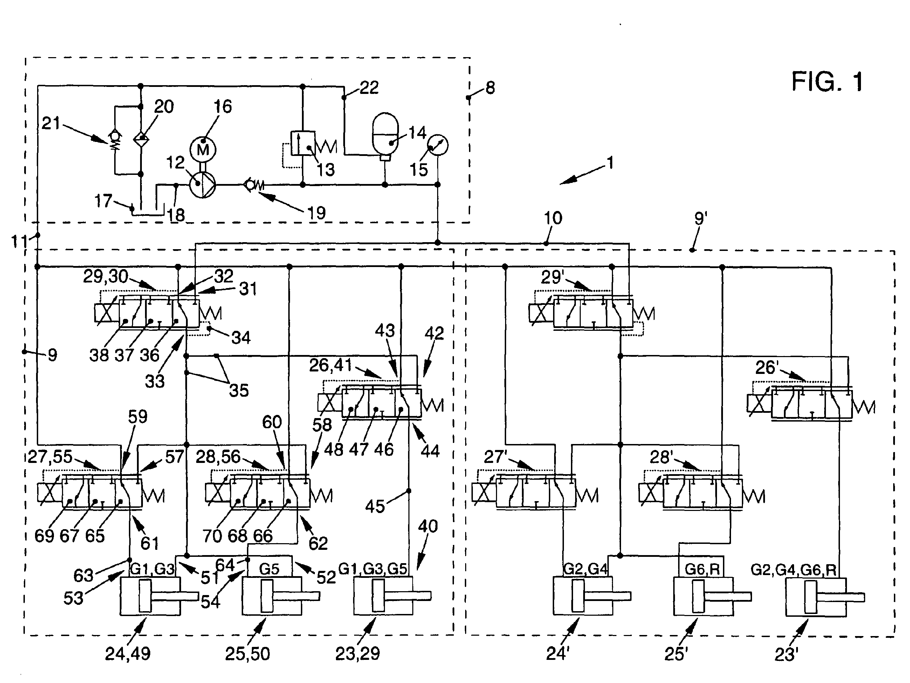

Die hydraulische Steuerungsvorrichtung 1 nach Fig. 1 weist eine Druckversorgungseinrichtung 8 und zwei identische Steuerungszweige 9, 9' auf, die über eine Systemdruckleitung 10 und eine Ölsumpfleitung 11 miteinander in Verbindung stehen. Die Steuerungszweige 9, 9' sind jeweils einem von zwei Teilgetrieben eines Doppelkupplungsgetriebes (nicht abgebildet) mit zwei aktiv schließbaren Motorkupplungen zugeordnet.

Die Druckversorgungseinrichtung 8 umfasst eine Ölpumpe 12, ein Druckbegrenzungsventil 13, einen Druckspeicher 14, und einen Drucksensor 15. Mittels der Ölpumpe 12, die von einem Elektromotor 16 antreibbar ist, wird ein Druckmittel (Hydrauliköl) aus einem Ölsumpf 17 über eine Saugleitung 18 und durch ein Rückschlagventil 19 in die Systemdruckleitung 10 gefördert. Über das Druckbegrenzungsventil 13 wird das Druckmittel bei zu hohem Systemdruck teilweise in die Ölsumpfleitung 11 abgeführt und fließt von dort über ein Filterelement 20 oder ein parallel angeordnetes Rückschlagventil 21 zurück in den Ölsumpf 17. Der Druckspeicher 14 dient zur druckabhängigen Speicherung eines Ölvolumens und sorgt, insbesondere bei intermittierendem Betrieb der Ölpumpe 12, für einen weitgehend konstanten Druckmittelvolumenstrom in der Systemdruckleitung 10. Für Montagezwecke, d.h. zur Abführung des gespeicherten Ölvolumens vor der Demontage des Druckspeichers 14, ist zwischen dem Druckspeicher 14 und der Ölsumpfleitung 11 eine Rückflussleitung 22 vorgesehen. Der Drucksensor 15 ist als p-v-Druckwandler ausgebildet und steht zur Überwachung des in der Systemdruckleitung 10 herrschenden Systemdruckes mit einem elektronischen Steuerungsgerät (nicht abgebildet) in Verbindung.

Aufgrund der Identität der beiden Steuerungszweige 9, 9' ist die nachfolgende Beschreibung weitgehend auf den linken Steuerungszweig 9 beschränkt. Der Steuerungszweig 9 umfasst drei hydraulische Stellantriebe, einen Kupplungssteller 23 und zwei Gangsteller 24, 25, denen jeweils ein Durchflussventil 26, 27, 28 unmittelbar und diesen ein gemeinsames Druckregelventil 29 vorgeschaltet ist.

Das gemeinsame Druckregelventil 29 ist als ein 3/3-Wege-Proportionalventil 30 mit zwei Eingängen 31, 32 und einem Ausgang 33 mit Ausgangsdruckregelung 34 ausgebildet ist, bei dem der erste Eingang 31 mit der Systemdruckleitung 10, der zweite Eingang 32 mit der Ölsumpfleitung 11, und der Ausgang 33 über eine verzweigte Zuleitung 35 mit den Durchflussventilen 26, 27, 28 in Verbindung steht, und bei dem in einer auch als Ruhestellung wirksamen ersten Endstellung 36 die Zuleitung 35 ungedrosselt mit der Ölsumpfleitung 11 verbunden und die Systemdruckleitung 10 abgesperrt ist, in einer Mittelstellung 37 die Eingänge 31, 32 und der Ausgang 33 abgesperrt sind, und in einer zweiten Endstellung 38 die Systemdruckleitung 10 ungedrosselt mit der Zuleitung 35 verbunden und die Ölsumpfleitung 11 abgesperrt ist.

Als Kupplungssteller 23 wird ein einfachwirkender Stellzylinder 39 mit einem einzigen Anschluss 40 verwendet, dem das Durchflussventil 26 unmittelbar vorgeschaltet ist. Das Durchflussventil 26 ist als ein 3/3-Wege-Proportionalventil 41 mit zwei Eingängen 42, 43 und einem Ausgang 44 ausgebildet, bei dem der erste Eingang 42 über die Zuleitung 35 mit dem Ausgang 33 des Druckregelventils 29, der zweite Eingang 43 mit der Ölsumpfleitung 11, und der Ausgang 44 über eine Anschlussleitung 45 mit dem Anschluss 40 des Stellzylinders 39 in Verbindung steht, und bei dem in einer auch als Ruhestellung wirksamen ersten Endstellung 46 die Anschlussleitung 45 ungedrosselt mit der Ölsumpfleitung 11 verbunden und die Zuleitung 35 abgesperrt ist, in einer Mittelstellung 47 die Eingänge 42, 43 und der Ausgang 44 abgesperrt sind, und in einer zweiten Endstellung 48 die Zuleitung 35 ungedrosselt mit der Anschlussleitung 45 verbunden und die Ölsumpfleitung 11 abgesperrt ist.

Als Gangsteller 24, 25 wird jeweils ein doppeltwirkender Differenzflächen-Stellzylinder 49, 50 mit einem Kleinflächenanschluss 51, 52 und einem Großflächenanschluss 53, 54 verwendet, bei dem der Kleinflächenanschluss 51, 52 über die Zuleitung 35 mit dem Ausgang 33 des Druckregelventils 29 in Verbindung steht. Das jeweils jedem der Stellzylinder 49, 50 unmittelbar vorgeschaltete Durchflussventil 27, 28 ist als ein 3/3-Wege-Proportionalventil 55, 56 mit zwei Eingängen 57, 58, 59, 60 und einem Ausgang 61, 62 ausgebildet, bei dem der erste Eingang 57, 58 über die Zuleitung 35 mit dem Ausgang 33 des Druckregelventils 29, der zweite Eingang 59, 60 mit der Ölsumpfleitung 11, und der Ausgang 61, 62 über eine Anschlussleitung 63, 64 mit dem Großflächenanschluss 53, 54 des Stellzylinders 49, 50 in Verbindung steht, und bei dem in einer auch als Ruhestellung wirksamen ersten Endstellung 65, 66 die Anschlussleitung 63, 64 ungedrosselt mit der Ölsumpfleitung 11 verbunden und die Zuleitung 35 abgesperrt ist, in einer Mittelstellung 67, 68 die Eingänge 57, 58, 59, 60 und der Ausgang 61, 62 abgesperrt sind, und in einer zweiten Endstellung 69, 70 die Zuleitung 35 ungedrosselt mit der Anschlussleitung 63, 64 verbunden und die Ölsumpfleitung 11 abgesperrt ist.

Dem ersten Gangsteller 24 des ersten Teilgetriebes bzw. des ersten Steuerungszweiges 9 sind der erste Gang G1 und der dritte Gang G3, d.h. die entsprechenden sperrsynchronisierten Gangschaltkupplungen zum Ein- und Auslegen des ersten Ganges G1 und des dritten Ganges G3, und dem zweiten Gangsteller 25 des ersten Teilgetriebes der fünfte Gang G5 und somit der Motorkupplung bzw. dem Kupplungssteller 23 des ersten Teilgetriebes die Gänge G1, G3, und G5 zugeordnet. Entsprechend sind dem ersten Gangsteller 24' des zweiten Teilgetriebes bzw. des zweiten Steuerungszweiges 9' die Gänge G2 und G4, dem zweiten Gangsteller 25' die Gänge G6 und R (Rückwärtsgang), und dem betreffenden Kupplungssteller 23' die Gänge G2, G4, G6, und R zugeordnet. Durch die für jeden der Stellantriebe 23, 24, 25 und 23', 24', 25' wirksame Serienschaltung aus einem Druckregelventil 29 bzw. 29' und einem Durchflussventil 26, 27, 28 bzw. 26', 27', 28' ergibt sich, insbesondere bei schnellen Änderungen der Stellkräfte und der Stellgeschwindigkeiten, eine gute Steuerbarkeit sowohl der Motorkupplungen über die zugeordneten Kupplungssteller 23, 23' als auch der Gangschaltkupplungen über die zugeordneten Gangsteller 24, 25, 24', 25'. Das gemeinsame Druckregelventil 29, 29' dient jeweils in dem jeweiligen Steuerungszweig 9, 9' zur Druckvorsteuerung der betreffenden Durchflussventile 26, 27, 28 bzw. 26', 27', 28', indem die über die Durchflussventile 26, 27, 28 bzw. 26', 27', 28' wirksame Druckdifferenz und damit der Betriebsdruck für die Kupplungssteller- und Gangstellerbetätigung eingestellt wird. Für die Motorkupplung bedeutet dies, dass in dem Kupplungssteller 23, 23' ein exakt bekannter Füll- oder Arbeitsdruck eingestellt werden kann, der für eine exakte Dosierung der Kupplungskapazitäten der beiden Motorkupplungen beim Anfahrvorgang und beim Gangwechsel wichtig ist. Mit dem zugeordneten Durchflussventil 26, 26' ist jeweils durch die Begrenzung des Druckmittelvolumenstromes eine Beschränkung der Stellgeschwindigkeit des Kupplungsstellers 23, 23' erzielbar. Außerdem kann die Stellbewegung bei gleichbleibendem Kraftniveau beliebig gestartet und gestoppt werden, indem bei gleicher Ansteuerung des Druckregelventils 29, 29' das Durchflussventil 26, 26' bedarfsgerecht geöffnet oder geschlossen wird. Dasselbe Betriebsverhalten wird durch die gewählte Anordnung bei den Gangstellern 24, 25, 24', 25' erreicht, die über die Durchflussventile 27, 28, 27', 28' gesteuert werden. Hierbei ergibt es sich vorteilhaft, dass das in dem betreffenden Gangsteller 24, 25, 24', 25' und damit in dem jeweils zugeordneten Schaltelement wirksame Kraftniveau mittels des Druckregelventils 29, 29' feinfühlig eingestellt und schnell verändert werden kann. Das zugeordnete Durchflussventil 27, 28, 27', 28' kann hierbei beim Einlegen des betreffenden Ganges zur Begrenzung der Stellgeschwindigkeit verwendet werden, um z.B. das Überschießen des Stellelementes (Schaltstange bzw. Schiebemuffe) nach dem Wegfall der Synchronisationskräfte beim Durchschalten zu verhindern. Zusätzlich wird im vorliegenden Fall auch die Umkehrung der Bewegungsrichtung der Gangsteller 24, 25, 24', 25' über das jeweilige Durchflussventil 27, 28, 27', 28' gesteuert.

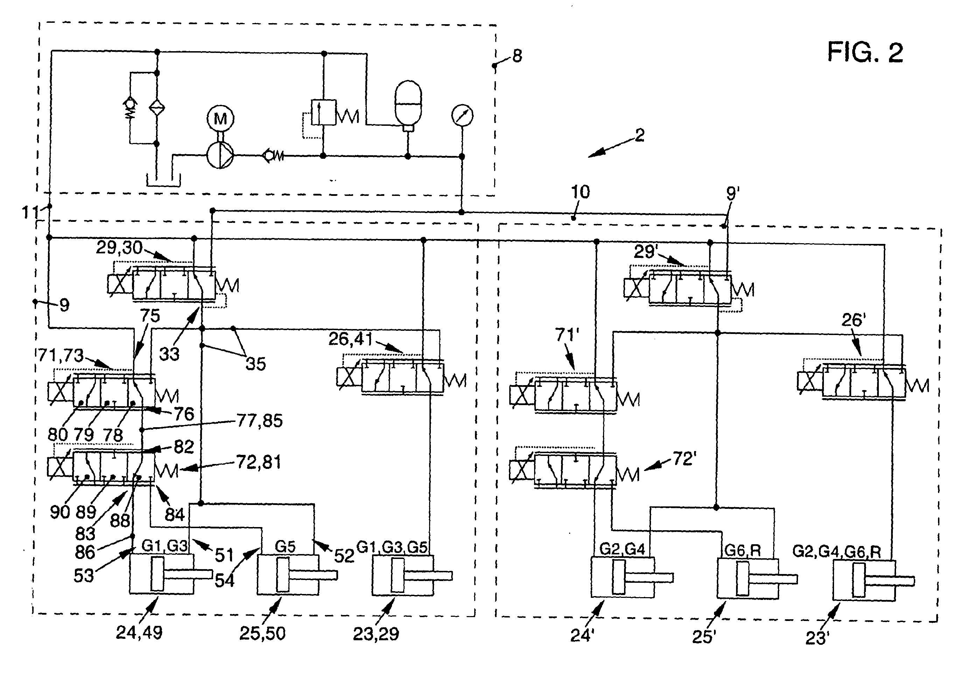

Die zweite Ausführung der hydraulischen Steuerungsvorrichtung 2 nach Fig. 2 unterscheidet sich bei sonst gleicher Anordnung gegenüber der Steuerungsvorrichtung 1 nach Fig. 1 dadurch, dass den Gangstellern 24, 25, 24', 25' in jedem der Steuerungszweige 9, 9' jeweils ein gemeinsames Durchflussventil 71, 71' zugeordnet ist, und dass dem Durchflussventil 71, 71' zum Wechsel des aktiven Gangstellers 24, 25, 24', 25' ein Umschaltventil 72, 72' nachgeschaltet ist.

Das gemeinsame Durchflussventil 71 ist als ein 3/3-Wege-Proportionalventil 73 mit zwei Eingängen 74, 75 und einem Ausgang 76 ausgebildet, bei dem der erste Eingang 74 über die Zuleitung 35 mit dem Ausgang 33 des gemeinsamen Druckregelventils 29, der zweite Eingang 75 mit der Ölsumpfleitung 11, und der Ausgang 76 über eine Verbindungsleitung 77 mit dem Umschaltventil 72 in Verbindung steht, und bei dem in einer auch als Ruhestellung wirksamen ersten Endstellung 78 die Verbindungsleitung 77 ungedrosselt mit der Ölsumpfleitung 11 verbunden und die Zuleitung 35 abgesperrt ist, in einer Mittelstellung 79 die Eingänge 74, 75 und der Ausgang 76 abgesperrt sind, und in einer zweiten Endstellung 80 die Zuleitung 35 ungedrosselt mit der Verbindungsleitung 77 verbunden und die Ölsumpfleitung 11 abgesperrt ist.

Die Kleinflächenanschlüsse 51, 52 der Stellzylinder 49, 50 stehen über die Zuleitung 35 unmittelbar mit dem Ausgang 33 des gemeinsamen Druckregelventils 29 in Verbindung. Das dem gemeinsamen Durchflussventil 71 nachgeschaltete Umschaltventil 72 ist als ein 3/3-Wege-Schaltventil 81 mit einem Eingang 82 und zwei Ausgängen 83, 84 ausgebildet, bei dem der Eingang 82 über eine Verbindungsleitung 85 mit dem Ausgang 76 des Durchflussventils 71, der erste Ausgang 83 über eine erste Anschlussleitung 86 mit dem Großflächenanschluss 53 des ersten Stellzylinders 49, und der zweite Ausgang 84 über eine zweite Anschlussleitung 87 mit dem Großflächenanschluss 54 des zweiten Stellzylinders 50 verbunden ist, und bei dem in einer ersten Endstellung 88 die Verbindungsleitung 85 mit der ersten Anschlussleitung 86 verbunden und die zweite Anschlussleitung 87 abgesperrt ist, in einer Mittelstellung 89 der Eingang 82 und die Ausgänge 83, 84 abgesperrt sind, und in einer zweiten Endstellung 90 die Verbindungsleitung 85 mit der zweiten Anschlussleitung 87 verbunden und die erste Anschlussleitung 86 abgesperrt ist.

Bei dieser Ausführung der Steuerungsvorrichtung 2 nach Fig. 2 wird im Unterschied zu der ersten Ausführung nach Fig. 1 in jedem der beiden Steuerungszweige 9, 9' jeweils unter Inkaufnahme des zusätzlichen, aber relativ preiswerten Umschaltventils 72, 72' ohne eine Beeinträchtigung der Funktionalität ein relativ teures Proportionalventil eingespart. Die Kupplungssteller 23, 23' und die Gangsteller 24, 25, 24', 25' sind aufgrund der jeweils wirksamen Serienschaltung eines Druckregelventils 29, 29' und eines Durchflussventils 26, 71, 26', 71' mit den schon beschriebenen Eigenschaften jeweils optimal steuerbar. Außerdem ergibt sich durch die Verwendung des Umschaltventils 72, 72', durch das jeweils die gleichzeitige Betätigung von zwei Gangstellern 24, 25 bzw. 24', 25' eines Teilgetriebes mechanisch ausgeschlossen ist, ein zusätzlicher Sicherheitsvorteil.

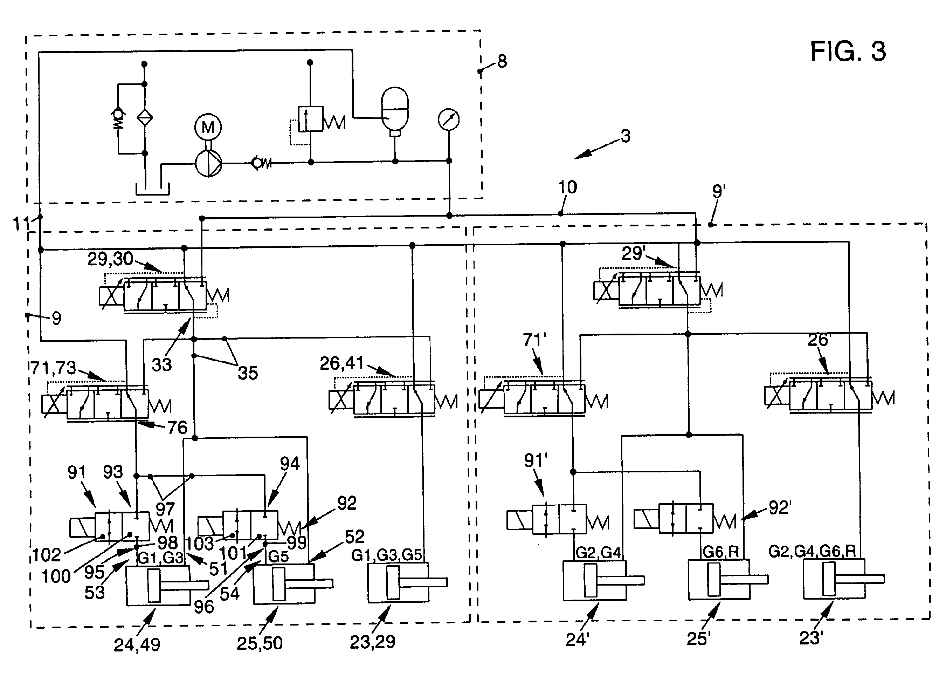

Bei der dritten Ausführung der hydraulischen Steuerungsvorrichtung 3 nach Fig. 3 ist bei sonst gleicher Anordnung im Unterschied zu der Steuerungsvorrichtung 2 nach Fig. 2 in jedem der beiden Steuerungszweige 9, 9' zum Wechsel des aktiven Gangstellers 24, 25, 24', 25' anstelle des Umschaltventils 72, 72' jeweils jedem der Gangsteller 24, 25, 24', 25' ein Absperrschaltventil 91, 92, 91', 92' mit einem Eingang 93, 94 und einem Ausgang 95, 96 vorgeschaltet, bei dem jeweils der Eingang 93, 94 über eine Verbindungsleitung 97 mit dem Ausgang 76 des gemeinsamen Durchflussventils 71 und der Ausgang 95, 96 über eine Anschlussleitung 98, 99 mit dem Großflächenanschluss 53, 54 des zugeordneten Stellzylinders 49, 50 verbunden ist, und bei dem in einer Grundstellung 100, 101 jeweils der Eingang 93, 94 und der Ausgang 95, 96 abgesperrt sind, und in einer Betätigungsstellung 102, 103 die Verbindungsleitung 97 jeweils mit der Anschlussleitung 98, 99 verbunden ist. Die Absperrschaltventile 91, 92, 91', 92' sind als Sitzventile ausgebildet, so dass der betreffende Großflächenanschluss 53, 54 im deaktivierten Zustand jeweils dicht abgeschlossen ist, wodurch eine bei einem Schieberventil leckagebedingt mögliche unerwünschte Bewegung der Gangsteller 24, 25 vermieden wird. Je nach Ausbildung der betreffenden Ventile kann sich durch die Verwendung der Absperrschaltventile 91, 92, 91', 92' anstelle der Umschaltventile 72, 72' auch ein Kostenvorteil ergeben, wobei die Funktionalität der Steuerungsvorrichtung 3 in vollem Umfang erhalten bleibt.

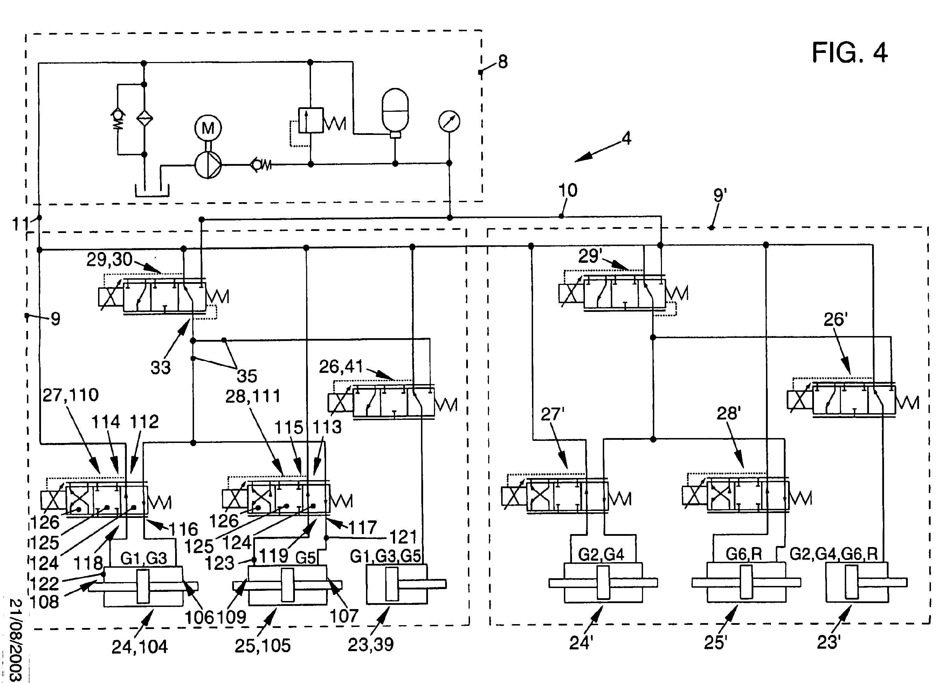

Die vierte Ausführung der hydraulischen Steuerungsvorrichtung 4 nach Fig. 4 unterscheidet sich von der Steuerungsvorrichtung 1 nach Fig. 1 dadurch, dass als Gangsteller 24, 25, 24', 25' nunmehr doppeltwirkende Gleichlauf-Stellzylinder 104, 105 mit jeweils zwei Anschlüssen 106, 107, 108, 109 verwendet werden und sich demzufolge eine andere Ausbildung und Anordnung der zugeordneten Durchflussventile 27, 28, 27', 28' ergibt. Das jeweils einem der Gangsteller 24, 25 unmittelbar vorgeschaltete Durchflussventil 27, 28 ist als ein 4/3-Wege-Proportionalventil 110, 111 mit zwei Eingängen 112, 113, 114, 115 und zwei Ausgängen 116, 117, 118, 119 ausgebildet, bei dem der erste Eingang 112, 113 über die Zuleitung 35 mit dem Ausgang 33 des Druckregelventils 29, der zweite Eingang 114, 115 mit der Ölsumpfleitung 11, der erste Ausgang 116, 117 über eine erste Anschlussleitung 120, 121 mit dem ersten Anschluss 106, 107 des Stellzylinders 104, 105, und der zweite Ausgang 118, 119 über eine zweite Anschlussleitung 122, 123 mit dem zweiten Anschluss 108, 109 des Stellzylinders 104, 105 in Verbindung steht, und bei dem in einer auch als Ruhestellung wirksamen ersten Endstellung 124 die Zuleitung 35 ungedrosselt mit der ersten Anschlussleitung 120, 121 und die zweite Anschlussleitung 122, 123 ungedrosselt mit der Ölsumpfleitung 11 verbunden ist, in einer Mittelstellung 125 die Eingänge 112, 113, 114, 115 und die Ausgänge 116, 117, 118, 119 abgesperrt sind, und in einer zweiten Endstellung 126 die Zuleitung 35 ungedrosselt mit der zweiten Anschlussleitung 122, 123 und die erste Anschlussleitung 120, 121 ungedrosselt mit der Ölsumpfleitung 11 verbunden ist. Die Funktionalität der vorliegenden hydraulischen Steuerungsvorrichtung 4 nach Fig. 4 entspricht weitgehend der ersten Ausführung der Steuerungsvorrichtung 1 nach Fig. 1. Auch hier wird die Umkehrung der Bewegungsrichtung der Gangsteller 24, 25, 24', 25' über das jeweilige Durchflussventil 27, 28, 27', 28' gesteuert.

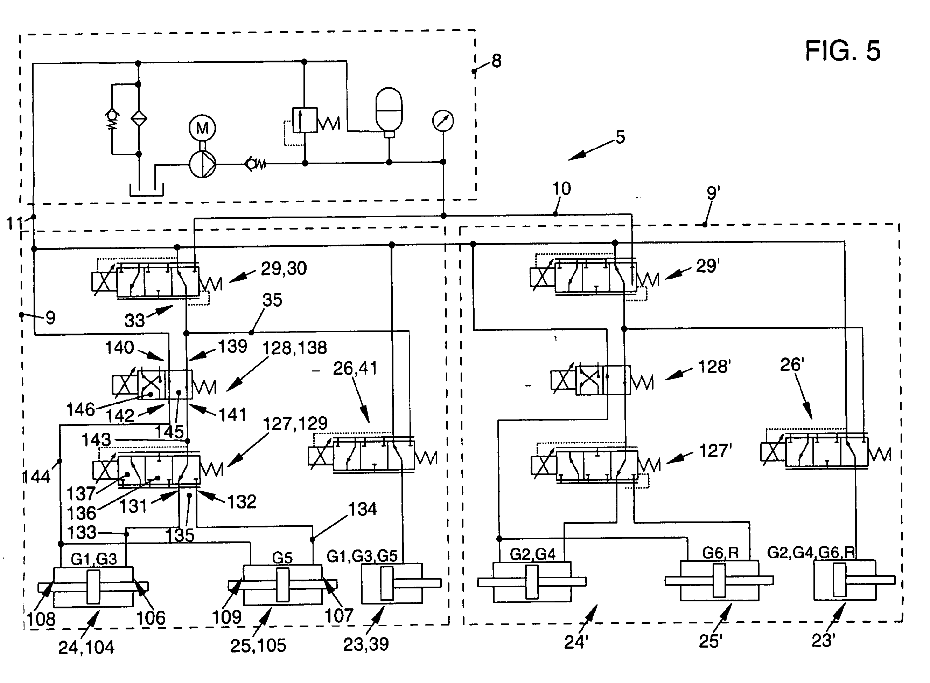

Die fünfte Ausführung der hydraulischen Steuerungsvorrichtung 5 nach Fig. 5 unterscheidet sich bei sonst gleicher Anordnung gegenüber der Steuerungsvorrichtung 4 nach Fig. 4 dadurch, dass den Gangstellern 24, 25, 24', 25' in jedem der Steuerungszweige 9, 9' jeweils ein gemeinsames Durchflussventil 127, 127' zugeordnet ist, und dass dem Durchflussventil 127, 127' zur Umkehrung der Bewegungsrichtung des aktiven Gangstellers 24, 25, 24', 25' ein Umschaltventil 128, 128' vorgeschaltet ist.

Das gemeinsame Durchflussventil 127 ist als ein 3/3-Wege-Proportionalventil 129 mit einem Eingang 130 und zwei Ausgängen 131, 132 ausgebildet, bei dem der erste Ausgang 131 über eine erste Anschlussleitung 133 mit dem ersten Anschluss 106 des ersten Stellzylinders 104 und der zweite Ausgang 132 über eine zweite Anschlussleitung 134 mit dem ersten Anschluss 107 des zweiten Stellzylinders 105 verbunden ist, und bei dem in einer auch als Grundstellung wirksamen ersten Endstellung 135 der Eingang 130 ungedrosselt mit der ersten Anschlussleitung 133 verbunden und die zweite Anschlussleitung 134 abgesperrt ist, in einer Mittelstellung 136 der Eingang 130 und die Ausgänge 131, 132 abgesperrt sind, und in einer zweiten Endstellung 137 der Eingang 130 ungedrosselt mit der zweiten Anschlussleitung 134 verbunden und die erste Anschlussleitung 133 abgesperrt ist.

Das dem gemeinsamen Durchflussventil 127 vorgeschaltete Umschaltventil 128 ist als ein 4/2-Wege-Schaltventil 138 mit zwei Eingängen 139, 140 und zwei Ausgängen 141, 142 ausgebildet, bei dem der erste Eingang 139 über die Zuleitung 35 mit dem Ausgang 33 des gemeinsamen Druckregelventils 29, der zweite Eingang 140 mit der Ölsumpfleitung 11, der erste Ausgang 141 über eine Verbindungsleitung 143 mit dem Eingang 130 des gemeinsamen Durchflussventils 127, und der zweite Ausgang 142 über eine verzweigte Anschlussleitung 144 mit dem zweiten Anschluss 108 des ersten Stellzylinders 104 und mit dem zweiten Anschluss 109 des zweiten Stellzylinders 105 in Verbindung steht, und bei dem in einer Grundstellung 145 die Zuleitung 35 mit der Verbindungsleitung 143 und die Anschlussleitung 144 mit der Ölsumpfleitung 11 verbunden ist, und in einer Betätigungsstellung 146 die Verbindungsleitung 143 mit der Ölsumpfleitung 11 und die Zuleitung 35 mit der Anschlussleitung 143 verbunden ist.

Bei der fünften Ausführung der Steuerungsvorrichtung 5 nach Fig. 5 wird im Unterschied zu der vierten Ausführung nach Fig. 4 in jedem der beiden Steuerungszweige 9, 9' jeweils unter Inkaufnahme des zusätzlichen, aber relativ preiswerten Umschaltventils 128, 128' ohne eine Beeinträchtigung der Funktionalität ein relativ teures Proportionalventil eingespart. Die Kupplungssteller 23, 23' und die Gangsteller 24, 25, 24', 25' sind aufgrund der jeweils wirksamen Serienschaltung eines Druckregelventils 29, 29' und eines Durchflussventils 26, 127, 26', 127' zur Dosierung der Stellkräfte und der Stellgeschwindigkeiten gut steuerbar. Über das gemeinsame Durchflussventil 127, 127' erfolgt in jedem der Steuerungszweige 9, 9' jeweils neben der Steuerung der Stellgeschwindigkeit auch der Wechsel des aktiven Gangstellers 24, 25, 24', 25'. Durch die Ausbildung und Anordnung der gemeinsamen Durchflussventile 127, 127' und der Umschaltventile 128, 128' wird der jeweils deaktivierte Gangsteller 24, 25, 24', 25' einerseits abgesperrt und andererseits drucklos geschaltet. Damit ist vorteilhaft die gleichzeitige Betätigung von zwei Gangstellern 24, 25 bzw. 24', 25' eines Teilgetriebes mechanisch ausgeschlossen.

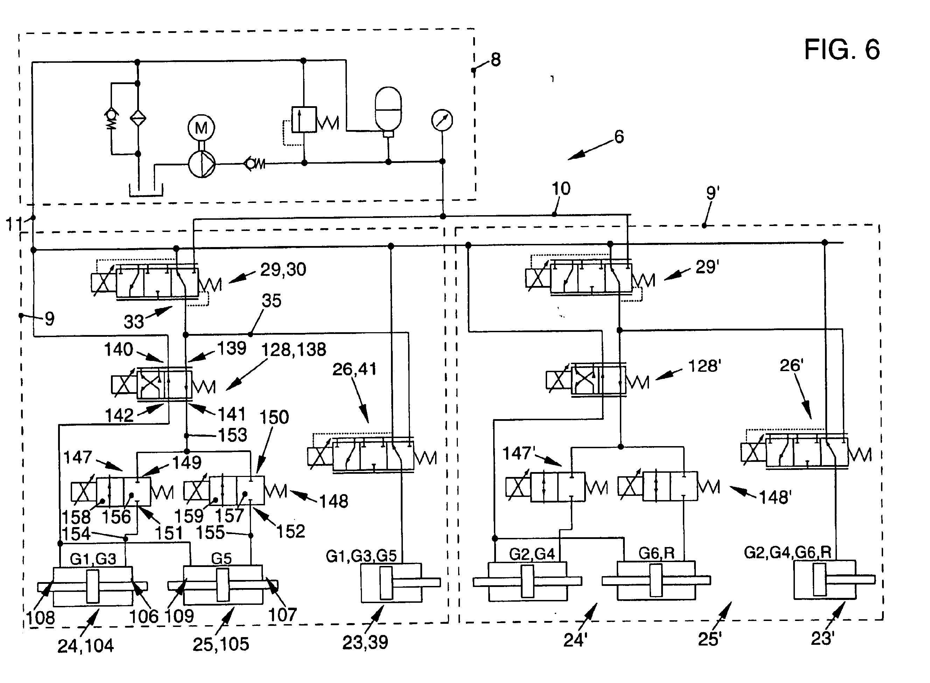

Bei der sechsten Ausführung der hydraulischen Steuerungsvorrichtung 6 nach Fig. 6 ist bei sonst gleicher Anordnung im Unterschied zu der Steuerungsvorrichtung 5 nach Fig. 5 in jedem der beiden Steuerungszweige 9, 9' zur Steuerung und zum Wechsel des aktiven Gangstellers 24, 25, 24', 25' anstelle des gemeinsamen Durchflussventils 127, 127' jedem der Gangsteller 24, 25, 24', 25' jeweils ein separates, als getaktetes Sitzventil ausgebildetes 2/2-Wege-Durchflussschaltventil 147, 148, 147', 148' mit einem Eingang 149, 150 und einem Ausgang 151, 152 vorgeschaltet, bei dem jeweils der Eingang 149, 150 über eine Verbindungsleitung 153 mit dem ersten Ausgang 141 des Umschaltventils 128 und der Ausgang 151, 152 über eine Anschlussleitung 154, 155 mit dem ersten Anschluss 106, 107 des zugeordneten Stellzylinders 104, 105 verbunden ist, und bei dem in einer Ruhestellung 156, 157 der Eingang 149, 150 und der Ausgang 151, 152 abgesperrt sind und in einer Betriebsstellung 158, 159 die Verbindungsleitung 153 mit der Anschlussleitung 154, 155 verbunden ist.

Der Durchsatz der vorteilhaft als getaktete Sitzventile ausgebildeten Durchflussschaltventile 147, 148, 147', 148' wird bei konstanter Schaltfrequenz mittels der Taktrate, d.h. dem Verhältnis aus Öffnungs- und Schließzeit, gesteuert. Bei gleicher Funktionalität wird durch deren Verwendung in jedem Steuerungszweig 9, 9' jeweils ein teures Proportionalventil eingespart, und die deaktivierten Gangsteller 24, 25, 24', 25' sind jeweils sicher gegen eine unerwünschte Bewegung gesichert.

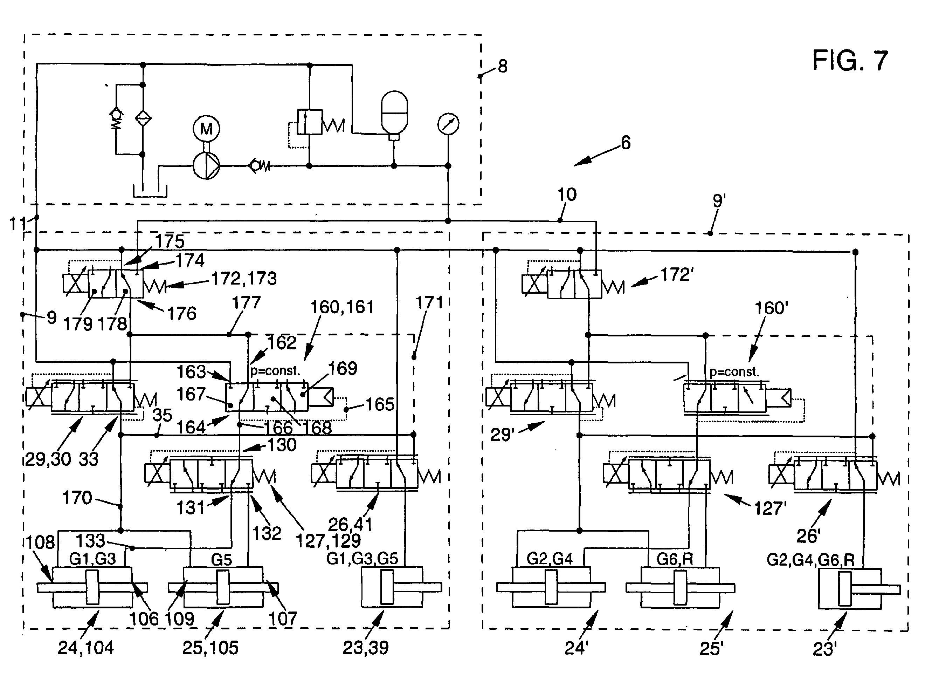

Bei der siebten Ausführung der hydraulischen Steuerungsvorrichtung 7 nach Fig. 7 ist im Unterschied zu der Steuerungsvorrichtung 5 nach Fig. 5 anstelle des Umschaltventils 128, 128' dem gemeinsamen Durchflussventil 127, 127' der Gangsteller 24, 25, 24' 25' jeweils ein separates Konstantdruckregelventil 160, 160' vorgeschaltet, das als ein 3/3-Wege-Proportionalventil 161 mit zwei Eingängen 162, 163 und einem Ausgang 164 mit Ausgangsdruckregelung 165 ausgebildet ist, bei dem der erste Eingang 162 mit der Systemdruckleitung 10, der zweite Eingang mit der Ölsumpfleitung 11, und der Ausgang 163 über eine Verbindungsleitung 166 mit dem Eingang 130 des gemeinsamen Durchflussventils 127 in Verbindung steht, und bei dem in einer auch als Ruhestellung wirksamen ersten Endstellung 167 die Systemdruckleitung 10 ungedrosselt mit der Verbindungsleitung 166 verbunden und die Ölsumpfleitung 11 abgesperrt ist, in einer Mittelstellung 168 die Eingänge 162, 163 und der Ausgang 164 abgesperrt sind, und in einer zweiten Endstellung 169 die Verbindungsleitung 166 ungedrosselt mit der Ölsumpfleitung 11 verbunden und die Systemdruckleitung 10 abgesperrt ist. Der Ausgang 33 des gemeinsamen Druckregelventils 29 steht über eine verzweigte Anschlussleitung 170 unmittelbar mit dem zweiten Anschluss 108 des ersten Stellzylinders 104 und mit dem zweiten Anschluss 109 des zweiten Stellzylinders 105 in Verbindung.

Bei vergleichbarer Funktionalität wird in der Steuerungsvorrichtung 7 nach Fig. 7 gegenüber der Steuerungsvorrichtung 5 nach Fig. 5 das Umschaltventil 128, 128' zur Umkehrung der Bewegungsrichtung der Gangsteller 24, 25, 24', 25' im Prinzip durch das selbsttätig gesteuerte Konstantdruckregelventil 160, 160' ersetzt. Unter entsprechend geänderten Steuerungseigenschaften wird die Umkehrung der Bewegungsrichtung der Gangsteller 24, 25, 24', 25' nunmehr über das gemeinsame Druckregelventil 29, 29' gesteuert. Unter Inkaufnahme einer schlechteren Steuerbarkeit der Kupplungssteller 23, 23' können diese, wie durch die gestrichelt eingezeichnete Verbindungsleitung 171 angedeutet, anstelle über die mit der Anschlussleitung 170 verbundene Zuleitung 35 und das gemeinsame Druckregelventil 29, 29' auch unmittelbar mit der Systemdruckleitung 10 verbunden sein.

In der Anordnung nach Fig. 7 sind die Steuerungszweige 9, 9' beispielhaft zur Aktivierung und Deaktivierung eingangsseitig jeweils mit einem Abschaltventil 172, 172' versehen, das als ein 3/2-Wege-Schaltventil 173 mit zwei Eingängen 174, 175 und einem Ausgang 176 ausgebildet ist, bei dem der erste Eingang 174 mit der Systemdruckleitung 10, der zweite Eingang 175 mit der Ölsumpfleitung 11, und der Ausgang 176 mit einer Druckleitung 177 des Steuerungszweiges 9 in Verbindung steht, und bei dem in einer Ruhestellung 178 die Druckleitung 177 mit der Ölsumpfleitung 11 und in einer Betriebsstellung 179 die Systemdruckleitung 10 mit der Druckleitung 177 verbunden ist. Durch die Abschaltventile 172, 172', die in gleicher Weise auch in den anderen Steuerungsvorrichtungen 1 - 6 zur Anwendung kommen könnten, werden die Steuerungszweige 9, 9' im deaktivierten Zustand jeweils vollständig drucklos geschaltet und somit unerwünschte leckagebedingte Bewegungen der Kupplungssteller 23, 23' und der Gangsteller 24, 24', 25, 25' verhindert.

### BEZUGSZEICHENLISTE

- 1: (hydraulische) Steuerungsvorrichtung
- 2: (hydraulische) Steuerungsvorrichtung
- 3: (hydraulische) Steuerungsvorrichtung
- 4: (hydraulische) Steuerungsvorrichtung
- 5: (hydraulische) Steuerungsvorrichtung
- 6: (hydraulische) Steuerungsvorrichtung
- 7: (hydraulische) Steuerungsvorrichtung
- 8: Druckversorgungseinrichtung
- 9: (erster) Steuerungszweig
- 9': (zweiter) Steuerungszweig
- 10: Systemdruckleitung
- 11: Ölsumpfleitung
- 12: Ölpumpe
- 13: Druckbegrenzungsventil
- 14: Druckspeicher
- 15: Drucksensor
- 16: Elektromotor
- 17: Ölsumpf
- 18: Saugleitung
- 19: Rückschlagventil
- 20: Filterelement
- 21: Rückschlagventil
- 22: Rückflussleitung
- 23: Kupplungssteller
- 23': Kupplungssteller
- 24: (erster) Gangsteller
- 24': (erster) Gangsteller
- 25: (zweiter) Gangsteller
- 25': (zweiter) Gangsteller
- 26: Durchflussventil
- 26': Durchflussventil
- 27: Durchflussventil
- 27': Durchflussventil
- 28: Durchflussventil
- 28': Durchflussventil
- 29: Druckregelventil
- 29': Druckregelventil
- 30: 3/3-Wege-Proportionalventil
- 31: (erster) Eingang
- 32: (zweiter) Eingang
- 33: Ausgang
- 34: Ausgangsdruckregelung
- 35: Zuleitung
- 36: erste Endstellung
- 37: Mittelstellung
- 38: zweite Endstellung
- 39: einfachwirkender Stellzylinder
- 40: Anschluss
- 41: 3/3-Wege-Proportionalventil
- 42: (erster) Eingang
- 43: (zweiter) Eingang
- 44: Ausgang
- 45: Anschlussleitung
- 46: erste Endstellung
- 47: Mittelstellung
- 48: zweite Endstellung
- 49: doppeltwirkender Differenzflächen-Stellzylinder, erster Stellzylinder
- 50: doppeltwirkender Differenzflächen-Stellzylinder, zweiter Stellzylinder
- 51: Kleinflächenanschluss
- 52: Kleinflächenanschluss
- 53: Großflächenanschluss
- 54: Großflächenanschluss
- 55: 3/3-Wege-Proportionalventil
- 56: 3/3-Wege-Proportionalventil
- 57: (erster) Eingang
- 58: (erster) Eingang
- 59: (zweiter) Eingang
- 60: (zweiter) Eingang
- 61: Ausgang
- 62: Ausgang
- 63: Anschlussleitung
- 64: Anschlussleitung
- 65: erste Endstellung
- 66: erste Endstellung
- 67: Mittelstellung
- 68: Mittelstellung
- 69: zweite Endstellung
- 70: zweite Endstellung
- 71: Durchflussventil
- 71': Durchflussventil
- 72: Umschaltventil
- 72': Umschaltventil
- 73: 3/3-Wege-Proportionalventil
- 74: (erster) Eingang
- 75: (zweiter) Eingang
- 76: Ausgang
- 77: Verbindungsleitung
- 78: erste Endstellung
- 79: Mittelstellung
- 80: zweite Endstellung
- 81: 3/3-Wege-Schaltventil
- 82: Eingang
- 83: (erster) Ausgang
- 84: (zweiter) Ausgang
- 85: Verbindungsleitung
- 86: erste Anschlussleitung
- 87: zweite Anschlussleitung
- 88: erste Endstellung
- 89: Mittelstellung
- 90: zweite Endstellung
- 91: (erstes) Absperrschaltventil
- 91': (erstes) Absperrschaltventil
- 92: (erstes) Absperrschaltventil
- 92': (erstes) Absperrschaltventil
- 93: Eingang
- 94: Eingang
- 95: Ausgang
- 96: Ausgang
- 97: Verbindungsleitung
- 98: Anschlussleitung
- 99: Anschlussleitung
- 100: Grundstellung
- 101: Grundstellung
- 102: Betätigungsstellung
- 103: Betätigungsstellung
- 104: doppeltwirkende Gleichlauf-Stellzylinder, erster Stellzylinder
- 105: doppeltwirkende Gleichlauf-Stellzylinder, zweiter Stellzylinder
- 106: (erster) Anschluss
- 107: (erster) Anschluss
- 108: (zweiter) Anschluss
- 109: (zweiter) Anschluss
- 110: 4/3-Wege-Proportionalventil
- 111: 4/3-Wege-Proportionalventil
- 112: (erster) Eingang
- 113: (erster) Eingang
- 114: (zweiter) Eingang
- 115: (zweiter) Eingang
- 116: (erster) Ausgang
- 117: (erster) Ausgang
- 118: (zweiter) Ausgang
- 119: (zweiter) Ausgang
- 120: erste Anschlussleitung
- 121: erste Anschlussleitung
- 122: zweite Anschlussleitung
- 123: zweite Anschlussleitung
- 124: erste Endstellung
- 125: Mittelstellung
- 126: zweite Endstellung
- 127: Durchflussventil
- 127': Durchflussventil
- 128: Umschaltventil
- 128': Umschaltventil
- 129: 3/3-Wege-Proportionalventil
- 130: Eingang
- 131: (erster) Ausgang
- 132: (zweiter) Ausgang
- 133: erste Anschlussleitung
- 134: zweite Anschlussleitung
- 135: erste Endstellung
- 136: Mittelstellung
- 137: zweite Endstellung
- 138: 4/2-Wege-Schaltventil
- 139: (erster) Eingang
- 140: (zweiter) Eingang
- 141: (erster) Ausgang
- 142: (zweiter) Ausgang
- 143: Verbindungsleitung
- 144: Anschlussleitung
- 145: Grundstellung
- 146: Betätigungsstellung
- 147: 2/2-Wege-Durchflussschaltventil
- 147': 2/2-Wege-Durchflussschaltventil
- 148: 2/2-Wege-Durchflussschaltventil
- 148': 2/2-Wege-Durchflussschaltventil
- 149: Eingang
- 150: Eingang
- 151: Ausgang
- 152: Ausgang
- 153: Verbindungsleitung
- 154: Anschlussleitung
- 155: Anschlussleitung
- 156: Ruhestellung
- 157: Ruhestellung
- 158: Betriebsstellung
- 159: Betriebsstellung
- 160: Konstantdruckregelventil
- 160': Konstantdruckregelventil
- 161: 3/3-Wege-Proportionalventil
- 162: (erster) Eingang
- 163: (zweiter) Eingang
- 164: Ausgang
- 165: Ausgangsdruckregelung
- 166: Verbindungsleitung
- 167: erste Endstellung
- 168: Mittelstellung
- 169: zweite Endstellung
- 170: Anschlussleitung
- 171: Verbindungsleitung
- 172: Abschaltventil
- 172': Abschaltventil
- 173: 3/2-Wege-Schaltventil
- 174: (erster) Eingang
- 175: (zweiter) Eingang
- 176: Ausgang
- 177: Druckleitung
- 178: Ruhestellung
- 179: Betriebsstellung
- G1: erster (Vorwärts-)Gang
- G2: zweiter (Vorwärts-)Gang
- G3: dritter (Vorwärts-)Gang
- G4: vierter (Vorwärts-)Gang
- G5: fünfter (Vorwärts-)Gang
- G6: sechster (Vorwärts-)Gang
- p: Druck
- R: Rückwärtsgang

## Patentansprüche

1. Hydraulische Steuerungsvorrichtung eines Doppelkupplungsgetriebes, das aus zwei Teilgetrieben mit jeweils einer aktiv schließbaren Motorkupplung und mehreren über sperrsynchronisierte Gangschaltkupplungen schaltbaren Gängen besteht, wobei die Steuerungsvorrichtung eine Druckversorgungseinrichtung mit einer Systemdruckleitung und einer Ölsumpfleitung und jeweils für jedes der beiden Teilgetriebe einen mit der Druckversorgungseinrichtung verbundenen Steuerungszweig mit hydraulischen Stellantrieben, nämlich einem Kupplungssteller und mehreren Gangstellern, und den Stellantrieben zugeordneten Magnetsteuerungsventilen umfasst, und den Kupplungsstellern (23, 23') und den Gangstellern (24, 25, 24', 25') jeweils ein Durchflussventil (26, 26', 27, 28, 27', 28') unmittelbar vorgeschaltet ist, **dadurch gekennzeichnet, dass** den Durchflussventilen (26, 27, 28, 26', 27', 28') in mindestens einem der Steuerungszweige (9, 9') ein gemeinsames Druckregelventil (29, 29') vorgeschaltet ist, wobei das gemeinsame Druckregelventil (29) als ein 3/3-Wege-Proportionalventil (30) mit zwei Eingängen (31, 32) und einem Ausgang (33) mit Ausgangsdruckregelung (34) ausgebildet ist, bei dem ein erster Eingang (31) mit der Systemdruckleitung (10), ein zweiter Eingang (32) mit der Ölsumpfleitung (11), und der Ausgang (33) über eine verzweigte Zuleitung (35) mit den Durchflussventilen (26, 27, 28) in Verbindung steht, und bei dem in einer auch als Ruhestellung wirksamen ersten Endstellung (36) die Zuleitung (35) ungedrosselt mit der Ölsumpfleitung (11) verbunden und die Systemdruckleitung (10) abgesperrt ist, in einer Mittelstellung (37) die Eingänge (31, 32) und der Ausgang (33) abgesperrt sind, und in einer zweiten Endstellung (38) die Systemdruckleitung (10) ungedrosselt mit der Zuleitung (35) verbunden und die Ölsumpfleitung (11) abgesperrt ist.

2. Steuerungsvorrichtung nach Anspruch 1, **dadurch gekennzeichnet, dass** bei Verwendung eines einfachwirkenden Stellzylinders (39) mit einem einzigen Anschluss (40) als Kupplungesteller (23) das zugeordnete Durchflussventil (26) als ein 3/3-Wege-Proportionalventil (41) mit zwei Eingängen (42, 43) und einem Ausgang (44) ausgebildet ist, bei dem ein erster Eingang (42) über die Zuleitung (35) mit dem Ausgang (33) des Druckregelventils (29), ein zweiter Eingang (43) mit der Ölsumpfleitung (11), und der Ausgang (44) über eine Anschlussleitung (45) mit dem Anschluss (40) des Stellzylinders (39) in Verbindung steht, und bei dem in einer auch als Ruhestellung wirksamen ersten Endstellung (46) die Anschlussleitung (45) ungedrosselt mit der Ölsumpfleitung (11) verbunden und die Zuleitung (35) abgesperrt ist, in einer Mittelstellung (47) die Eingänge (42, 43) und der Ausgang (44) abgesperrt sind, und in einer zweiten Endstellung (48) die Zuleitung (35) ungedrosselt mit der Anschlussleitung (45) verbunden und die Ölsumpfleitung (11) abgesperrt ist.

3. Steuerungsvorrichtung nach einem der Ansprüche 1 oder 2, **dadurch gekennzeichnet, dass** bei Verwendung eines doppeltwirkenden Differenzflächen-Stellzylinders (49, 50) mit einem Kleinflächenanschluss (51, 52) und einem Großflächenanschluss (53, 54) als Gangsteller (24, 25) der Kleinflächenanschluss (51, 52) über die Zuleitung (35) mit dem Ausgang (33) des Druckregelventils (29) in Verbindung steht und das zugeordnete Durchflussventil (27, 28) als ein 3/3-Wege-Proportionalventil (55, 56) mit zwei Eingängen (57, 58, 59, 60) und einem Ausgang (61, 62) ausgebildet ist, bei dem ein erster Eingang (57, 58) über die Zuleitung (35) mit dem Ausgang (33) des Druckregelventils (29), ein zweiter Eingang (59, 60) mit der Ölsumpfleitung (11), und der Ausgang (61, 62) über eine Anschlussleitung (63, 64) mit dem Großflächenanschluss (53, 54) des Stellzylinders (49, 50) in Verbindung steht, und bei dem in einer auch als Ruhestellung wirksamen ersten Endstellung (65, 66) die Anschlussleitung (63, 64) ungedrosselt mit der Ölsumpfleitung (11) verbunden und die Zuleitung (35) abgesperrt ist, in einer Mittelstellung (67, 68) die Eingänge (57, 58, 59, 60) und der Ausgang (61, 62) abgesperrt sind, und in einer zweiten Endstellung (69, 70) die Zuleitung (35) ungedrosselt mit der Anschlussleitung (63, 64) verbunden und die Ölsumpfleitung (11) abgesperrt ist.

4. Steuerungsvorrichtung nach einem der Ansprüche 1 oder 2, **dadurch gekennzeichnet, dass** bei Verwendung eines doppeltwirkenden Gleichlauf-Stellzylinders (104, 105) mit zwei Anschlüssen (106, 107, 108, 109) als Gangsteller (24, 25) das zugeordnete Durchflussventil (27, 28) als ein 4/3-wege-Proportionalventil (110, 111) mit zwei Eingängen (112, 113, 114, 115) und zwei Ausgängen (116, 117, 118, 119) ausgebildet ist, bei dem ein erster Eingang (112, 113) über die Zuleitung (35) mit dem Ausgang (33) des Druckregelventils (29), ein zweiter Eingang (114, 115) mit der Ölsumpfleitung (11), ein erster Ausgang (116, 117) über eine erste Anschlussleitung (120, 121) mit einem ersten Anschluss (106, 107) des Stellzylinders (104, 105), und ein zweiter Ausgang (118, 119) über eine zweite Anschlussleitung (122, 123) mit einem zweiten Anschluss (108, 109) des Stellzylinders (104, 105) in Verbindung steht, und bei dem in einer auch als Ruhestellung wirksamen ersten Endstellung (124) die Zuleitung (35) ungedrosselt mit der ersten Anschlussleitung (120, 121) und die zweite Anschlussleitung (122, 123) ungedrosselt mit der Ölsumpfleitung (11) verbunden ist, in einer Mittelstellung (125) die Eingänge (112, 113, 114, 115) und die Ausgänge (116, 117, 118, 119) abgesperrt sind, und in einer zweiten Endstellung (126) die Zuleitung (35) ungedrosselt mit der zweiten Anschlussleitung (122, 123) und die erste Anschlussleitung (120, 121) ungedrosselt mit der Ölsumpfleitung (11) verbunden ist.

5. Steuerungsvorrichtung nach einem der Ansprüche 1 bis 4, **dadurch gekennzeichnet, dass** den Gangstellern (24, 25, 24', 25') in mindestens einem der Steuerungszweige (9, 9') ein gemeinsames Durchflussventil (71, 71') zugeordnet ist, und dass dem gemeinsamen Durchflussventil (71, 71') zum Wechsel des aktiven Gangstellers (24, 25, 24', 25') und / oder zur Umkehrung der Bewegungsrichtung des aktiven Gangstellers (24, 25, 24', 25') ein Umschaltventil (72, 72') vor- oder nachgeschaltet ist.

6. Steuerungsvorrichtung nach Anspruch 5, **dadurch gekennzeichnet, dass** zum Wechsel des aktiven Gangstellers (24, 25, 24', 25') anstelle eines nachgeschalteten Umschaltventils (72, 72') jedem der Gangsteller (24, 25, 24', 25') ein separates Absperrschaltventil (91, 92, 91', 92') vorgeschaltet ist.

7. Steuerungsvorrichtung nach Anspruch 3 und 5, **dadurch gekennzeichnet, dass** bei Verwendung von zwei Gangstellern (24, 25) in einem der Steuerungszweige (9) die Kleinflächenanschlüsse (51, 52) der Stellzylinder (49, 50) über die Zuleitung (35) unmittelbar mit dem Ausgang (33) des gemeinsamen Druckregelventils (29) in Verbindung stehen und dem gemeinsamen Durchflussventil (71) ein Umschaltventil (72) zum Wechsel des aktiven Gangstellers (24, 25) nachgeschaltet ist, das als ein 3/3-Wege-Schaltventil (81) mit einem Eingang (82) und zwei Ausgängen (83, 84) ausgebildet ist, bei dem der Eingang (82) über eine Verbindungsleitung (85) mit dem Ausgang (76) des Durchflussventils (71), ein erster Ausgang (83) über eine erste Anschlussleitung (86) mit dem Großflächenanschluss (53) des ersten Stellzylinders (49), und ein zweiter Ausgang (84) über eine zweite Anschlussleitung (87) mit dem Großflächenanschluss (54) des zweiten Stellzylinders (50) verbunden ist, und bei dem In einer ersten Endstellung (88) die Verbindungsleitung (85) mit der ersten Anschlussleitung (86) verbunden und die zweite Anschlussleitung (87) abgesperrt ist, in einer Mittelstellung (89) der Elngang (82) und die Ausgänge (83, 84) abgesperrt sind, und in einer zweiten Endstellung (90) die Verbindungsleitung (85) mit der zweiten Anschlussleitung (87) verbunden und die erste Anschlussleitung (86) abgesperrt ist.

8. Steuerungsvorrichtung nach Anspruch 6 und 7, **dadurch gekennzeichnet, dass** bei Verwendung mehrerer Gangsteller (24, 25) in einem der Steuerungszweige (9) zum Wechsel des aktiven Gangstellers (24, 25) anstelle eines Umschaltventils (72) jedem der Gangsteller (24, 25) ein Absperrschaltventil (91, 92) mit einem Eingang (93, 94) und einem Ausgang (95, 96) vorgeschaltet ist, bei dem jeweils der Eingang (93, 94) über eine Verbindungsleitung (97) mit dem Ausgang (76) des gemeinsamen Durchflussventils (71) und der Ausgang (95, 96) über eine Anschlussleitung (98, 99) mit dem Großflächenanschluss (53, 54) des zugeordneten Stellzylinders (49, 50) verbunden ist, und bei dem in einer Grundstellung (100, 101) der Eingang (93, 94) und der Ausgang (95, 96) abgesperrt sind, und in einer Betätigungsstellung (102, 103) die Verbindungsleitung (97) mit der Anschlussleitung (98, 99) verbunden ist.

9. Steuerungsvorrichtung nach Anspruch 6 oder 8, **dadurch gekennzelchnet, dass** die Absperrschaltventile (91, 92, 91', 92') als Sitzventile ausgebildet sind.

10. Steuerungsvorrichtung nach Anspruch 4 und 5, **dadurch gekennzeichnet, dass** bei Verwendung von zwei Gangstellern (24, 25) in einem der Steuerungszweige (9) das gemeinsame Durchflussventil (127) als ein 3/3-Wege-Proportionalventil (129) mit einem Eingang (130) und zwei Ausgängen (131, 132) ausgebildet ist, bei dem ein erster Ausgang (131) über eine erste Anschlussleitung (133) mit dem ersten Anschluss (106) des ersten Stellzylinders (104) und ein zweiter Ausgang (132) über eine zweite Anschlussleitung (134) mit dem ersten Anschluss (107) des zweiten Stellzylinders (105) verbunden ist, und bei dem in einer auch als Grundstellung wirksamen ersten Endstellung (135) der Eingang (130) ungedrosselt mit der ersten Anschlussleitung (133) verbunden und die zweite Anschlussleitung (134) abgesperrt ist, in einer Mittelstellung (136) der Eingang (130) und die Ausgänge (131, 132) abgesperrt sind, und in einer zweiten Endstellung (137) der Eingang (130) ungedrosselt mit der zweiten Anschlussleitung (134) verbunden und die erste Anschlussleitung (133) abgesperrt ist, und dass dem gemeinsamen Durchflussventil (127) ein Umschaltventil (128) zur Umkehrung der Bewegungsrichtung vorgeschaltet Ist, das als ein 4/2-Wege-Schaltventil (138) mit zwei Eingängen (139, 140) und zwei Ausgängen (141, 142) ausgebildet ist, bei dem ein erster Eingang (139) über die Zuleitung (35) mit dem Ausgang (33) des gemelnsamen Druckregelventils (29), ein zweiter Eingang (140) mit der Ölsumpfleitung (11), ein erster Ausgang (141) über eine Verbindungsleitung (143) mit dem Eingang (130) des gemeinsamen Durchflussventils (127), und ein zweiter Ausgang (142) über eine verzweigte Anschlussleitung (144) mit dem zweiten Anschluss (108) des ersten Stellzylinders (104) und mit dem zweiten Anschluss (109) des zweiten Stellzylinders (105) in Verbindung steht, und bei dem in einer Grundstellung (145) die Zuleitung (35) mit der Verbindungsleitung (143) und die Anschlussleitung (144) mit der Ölsumpfleitung (11) verbunden ist, und in einer Betätigungsstellung (146) die Verbindungsleitung (143) mit der Ölsumpfleitung (11) und die Zuleitung (35) mit der Anschlussleitung (144) verbunden ist.

11. Steuerungsvorrichtung nach Anspruch 10, **dadurch gekennzeichnet, dass** bei Verwendung mehrere Gangsteller (24, 25) in einem der Steuerungszweige (9) zur Steuerung und zum Wechsel des aktiven Gangstellers (24, 25) anstelle des gemeinsamen Durchflussventils (127) jedem der Gangsteller (24, 25) jeweils ein separates 2/2-Wege-Durchflussschaltventil (147, 148) mit einem Eingang (149, 150) und einem Ausgang (151, 152) vorgeschaltet ist, bei dem jeweils der Eingang (149, 150) über eine Verbindungsleitung (153) mit dem ersten Ausgang (141) des Umschaltventils (128) und der Ausgang (151, 152) über eine Anschlussleitung (154, 155) mit dem ersten Anschluss (106, 107) des zugeordneten Stellzylinders (104, 105) verbunden ist, und bei dem in einer Ruhestellung (156, 157) der Eingang (149, 150) und der Ausgang (151, 152) abgesperrt sind und in einer Betriebsstellung (158, 159) die Verbindungsleitung (153) mit der Anschlussleitung (154, 155) verbunden ist.

12. Steuerungsvorrichtung nach Anspruch 11, **dadurch gekennzeichnet, dass** die Durchflussschaltventile (147, 148, 147', 148') als getaktete Sitzventile ausgebildet sind.

13. Steuerungsvorrichtung nach Anspruch 10, **dadurch gekennzeichnet, dass** anstelle des Umschaltventils (128) dem gemeinsamen Durchflussventil (127) ein separates Konstantdruckregelventil (160) vorgeschaltet ist, das als ein 3/3-Wege-Proportionalventil (161) mit zwei Eingängen (162, 163) und einem Ausgang (164) mit Ausgangsdruckregelung (165) ausgebildet ist, bei dem ein erster Eingang (162) mit der Systemdruckleitung (10), ein zweiter Eingang (163) mit der Ölsumpfleitung (11), und der Ausgang (164) über eine Verbindungsleitung (166) mit dem Eingang (130) des gemeinsamen Durchflussventils (127) in Verbindung steht, und bei dem in einer auch als Ruhestellung wirksamen ersten Endstellung (167) die Systemdruckleitung (10) ungedrosselt mit der Verbindungsleitung (166) verbunden und die Ölsumpfleitung (11) abgesperrt ist, in einer Mittelstellung (168) die Eingänge (162, 163) und der Ausgang (164) abgesperrt sind, und in einer zweiten Endstellung (169) die Verbindungsleitung (166) ungedrosselt mit der Ölsumpfleitung (11) verbunden und die Systemdruckleitung (10) abgesperrt ist, und dass der Ausgang des gemeinsamen Druckregelventils (127) über eine verzweigte Anschlussleitung (170) unmittelbar mit dem zweiten Anschluss (108) des ersten Stellzylinders (104) und mit dem zweiten Anschluss (109) des zweiten Stellzylinders (105) in Verbindung steht.

14. Steuerungsvorrichtung nach einem der Ansprüche 1 bis 13, **dadurch gekennzeichnet, dass** mindestens ein Steuerungszweig (9, 9') zur Aktivierung und Deaktivierung eingangsseitig mit einem Abschaltventil (172, 172') versehen ist.

15. Steuerungsvorrichtung nach Anspruch 14, **dadurch gekennzeichnet, dass** das Abschaltventil (172) als ein 3/2-Wege-Schaltventil (173) mit zwei Eingängen (174, 175) und einem Ausgang (176) ausgebildet ist, bei dem ein erster Eingang (174) mit der Systemdruckleitung (10), ein zweiter Eingang (175) mit der Ölsumpfleitung (11), und der Ausgang (176) mit einer Druckleitung (177) des Steuerungszweiges (9) In Verbindung steht, und bei dem in einer Ruhestellung (178) die Druckleitung (177) mit der Ölsumpfleitung (11) und in einer Betriebsstellung (179) die Systemdruckleitung (10) mit der Druckleitung (177) verbunden ist.

## Claims

1. Hydraulic control device of a dual-clutch transmission consisting of two partial transmissions, each with an actively closable engine clutch and a plurality of gears shiftable by means of lock-synchronized gear-shift clutches, the control device comprising a pressure supply arrangement with a system pressure line and an oil sump line and, for each of the two partial transmissions, a respective control branch connected to the pressure supply arrangement, with hydraulic actuating drives, namely a clutch actuator and a plurality of gear actuators, and comprising solenoid control valves associated with the actuating drives, a respective flow-control valve (26, 26', 27, 28, 27', 28') being connected directly upstream of the clutch actuators (23, 23') and the gear actuators (24, 25, 24', 25'), **characterized in that** a common pressure-control valve (29, 29') is connected upstream of the flow-control valves (26, 27, 28, 26', 27' 28') in at least one of the control branches (9, 9'), the common pressure-control valve (29) being in the form of a 3/3-way proportional valve (30) with two inlets (31, 32) and one outlet (33) with outlet pressure control (34), in which 3/3-way proportional valve (30) a first inlet (31) is connected to the system pressure line (10), a second inlet (32) is connected to the oil sump line (11) and the outlet (33) is connected via a branched feed line (35) to the flow-control valves (26, 27, 28), and in which, in a first end position (36) which also acts as a rest position, the feed line (35) is connected in an unthrottled manner to the oil sump line (11) and the system pressure line (10) is blocked, in a central position (37) the inlets (31, 32) and the outlet (33) are blocked, and in a second end position (38) the system pressure line (10) is connected in an unthrottled manner to the feed line (35) and the oil sump line (11) is blocked.

2. Control device according to Claim 1, **characterized in that**, if a single-acting actuating cylinder (39) with a single connection (40) is used as the clutch actuator (23), the associated flow-control valve (26) is in the form of a 3/3-way proportional valve (41) with two inlets (42, 43) and one outlet (44), in which a first inlet (42) is connected via the feed line (35) to the outlet (33) of the pressure-control valve (29), a second inlet (43) is connected to the oil sump line (11) and the outlet (44) is connected via a supply line (45) to the connection (40) of the actuating cylinder (39), and in which, in a first end position (46) which also acts as a rest position, the supply line (45) is connected in an unthrottled manner to the oil sump line (11) and the feed line (35) is blocked, in a central position (47) the inlets (42, 43) and the outlet (44) are blocked, and in a second end position (48) the feed line (35) is connected in an unthrottled manner to the supply line (45) and the oil sump line (11) is blocked.

3. Control device according to either of Claims 1 and 2, **characterized in that,** if a double-acting differential-area actuating cylinder (49, 50) with a small-area connection (51, 52) and a large-area connection (53, 54) is used as the gear actuator (24, 25), the small-area connection (51, 52) is connected via the feed line (35) to the outlet (33) of the pressure-control valve (29) and the associated flow-control valve (27, 28) is in the form of a 3/3-way proportional valve (55, 56) with two inlets (57, 58, 59, 60) and one outlet (61, 62), in which a first inlet (57, 58) is connected via the feed line (35) to the outlet (33) of the pressure-control valve (29), a second inlet (59, 60) is connected to the oil sump line (11) and the outlet (61, 62) is connected via a supply line (63, 64) to the large-area connection (53, 54) of the actuating cylinder (49, 50), and in which, in a first end position (65, 66) which also acts as a rest position, the supply line (63, 64) is connected in an unthrottled manner to the oil sump line (11) and the feed line (35) is blocked, in a central position (67, 68) the inlets (57, 58, 59, 60) and the outlet (61, 62) are blocked, and in a second end position (69, 70) the feed line (35) is connected in an unthrottled manner to the supply line (63, 64) and the oil sump line (11) is blocked.

4. Control device according to either of Claims 1 and 2, **characterized in that**, if a double-acting constant-speed actuating cylinder (104, 105) with two connections (106, 107, 108, 109) is used as the gear actuator (24, 25), the associated flow-control valve (27, 28) is in the form of a 4/3-way proportional valve (110, 111) with two inlets (112, 113, 114, 115) and two outlets (116, 117, 118, 119), in which a first inlet (112, 113) is connected via the feed line (35) to the outlet (33) of the pressure-control valve (29), a second inlet (114, 115) is connected to the oil sump line (11), a first outlet (116, 117) is connected via a first supply line (120, 121) to a first connection (106, 107) of the actuating cylinder (104, 105) and a second outlet (118, 119) is connected via a second supply line (122, 123) to a second connection (108, 109) of the actuating cylinder (104, 105), and in which, in a first end position (124) which also acts as a rest position, the feed line (35) is connected in an unthrottled manner to the first supply line (120, 121) and the second supply line (122, 123) is connected in an unthrottled manner to the oil sump line (11), in a central position (125) the inlets (112, 113, 114, 115) and the outlets (116, 117, 118, 119) are blocked, and in a second end position (126) the feed line (35) is connected in an unthrottled manner to the second supply line (122, 123) and the first supply line (120, 121) is connected in an unthrottled manner to the oil sump line (11).

5. Control device according to any one of Claims 1 to 4, **characterized in that** in at least one of the control branches (9, 9') a common flow-control valve (71, 71') is associated with the gear actuators (24, 25, 24', 25'), and **in that** a reversing valve (72, 72') is connected upstream or downstream of the common flow-control valve (71, 71') for changing the active gear actuator (24, 25, 24' 25') and/or for reversing the direction of movement of the active gear actuator (24, 25, 24', 25').

6. Control device according to Claim 5, **characterized in that**, for changing the active gear actuator (24, 25, 24', 25'), a separate on-off stop valve (91, 92, 91', 92') is connected upstream of each of the gear actuators (24, 25, 24', 25'), instead of a reversing valve (72, 72') connected downstream.

7. Control device according to Claims 3 and 5, **characterized in that**, if two gear actuators (24, 25) are used in one of the control branches (9), the small-area connections (51, 52) of the actuating cylinders (49, 50) are connected via the feed line (35) directly to the outlet (33) of the common pressure-control valve (29) and, for changing the active gear actuator (24, 25), a reversing valve (72), which is in the form of a 3/3-way on-off valve (81) with one inlet (82) and two outlets (83, 84), is connected downstream of the common flow-control valve (71), in which 3/3-way on-off valve (81) the inlet (82) is connected via a connecting line (85) to the outlet (76) of the flow-control valve (71), a first outlet (83) is connected via a first supply line (86) to the large-area connection (53) of the first actuating cylinder (49) and a second outlet (84) is connected via a second supply line (87) to the large-area connection (54) of the second actuating cylinder (50), and in which, in a first end position (88), the connecting line (85) is connected to the first supply line (86) and the second supply line (87) is blocked, in a central position (89) the inlet (82) and the outlets (83, 84) are blocked and in a second end position (90) the connecting line (85) is connected to the second supply line (87) and the first supply line (86) is blocked.

8. Control device according to Claims 6 and 7, **characterized in that**, if a plurality of gear actuators (24, 25) are used in one of the control branches (9), an on-off stop valve (91, 92) with one inlet (93, 94) and one outlet (95, 96) is connected upstream of each of the gear actuators (24, 25) instead of a reversing valve (72), for changing the active gear actuator (24, 25), in which on-off stop valve (91, 92) the respective inlet (93, 94) is connected via a connecting line (97) to the outlet (76) of the common flow-control valve (71) and the respective outlet (95, 96) is connected via a supply line (98, 99) to the large-area connection (53, 54) of the associated actuating cylinder (49, 50), and in which, in a base position (100, 101), the inlet (93, 94) and the outlet (95, 96) are blocked, and in an actuating position (102, 103) the connecting line (97) is connected to the supply line (98, 99).

9. Control device according to Claim 6 or 8, **characterized in that** the on-off stop valves (91, 92, 91' 92') are in the form of seat valves.

10. Control device according to Claims 4 and 5, **characterized in that**, if two gear actuators (24, 25) are used in one of the control branches (9), the common flow-control valve (127) is in the form of a 3/3-way proportional valve (129) with one inlet (130) and two outlets (131, 132), in which a first outlet (131) is connected via a first supply line (133) to the first connection (106) of the first actuating cylinder (104) and a second outlet (132) is connected via a second supply line (134) to the first connection (107) of the second actuating cylinder (105), and in which, in a first end position (135) which also acts as a base position, the inlet (130) is connected in an unthrottled manner to the first supply line (133) and the second supply line (134) is blocked, in a central position (136) the inlet (130) and the outlets (131, 132) are blocked, and in a second end position (137) the inlet (130) is connected in an unthrottled manner to the second supply line (134) and the first supply line (133) is blocked, and **in that** a reversing valve (128) which is in the form of a 4/2-way on-off valve (138) with two inlets (139, 140) and two outlets (141, 142) is connected upstream of the common flow-control valve (127), for reversing the direction of movement, in which 4/2-way on-off valve (138) a first inlet (139) is connected via the feed line (35) to the outlet (33) of the common pressure-control valve (29), a second inlet (140) is connected to the oil sump line (11), a first outlet (141) is connected via a connecting line (143) to the inlet (130) of the common flow-control valve (127) and a second outlet (142) is connected via a branched supply line (144) to the second connection (108) of the first actuating cylinder (104) and to the second connection (109) of the second actuating cylinder (105), and in which, in a base position (145), the feed line (35) is connected to the connecting line (143) and the supply line (144) is connected to the oil sump line (11), and in an actuating position (146) the connecting line (143) is connected to the oil sump line (11) and the feed line (35) is connected to the supply line (144).

11. Control device according to Claim 10, **characterized in that**, if a plurality of gear actuators (24, 25) are used in one of the control branches (9) for controlling and changing the active gear actuator (24, 25), instead of the common flow-control valve (127), a respective separate 2/2-way on-off flow-control valve (147, 148) with one inlet (149, 150) and one outlet (151, 152) is connected upstream of each of the gear actuators (24, 25), in which 2/2-way on-off flow-control valve (147, 148) the respective inlet (149, 150) is connected via a connecting line (153) to the first outlet (141) of the reversing valve (128) and the respective outlet (151, 152) is connected via a supply line (154, 155) to the first connection (106, 107) of the associated actuating cylinder (104, 105), and in which, in a rest position (156, 157), the inlet (149, 150) and the outlet (151, 152) are blocked and in an operating position (158, 159) the connecting line (153) is connected to the supply line (154, 155).

12. Control device according to Claim 11, **characterized in that** the on-off flow-control valves (147, 148, 147', 148') are configured as timed seat valves.

13. Control device according to Claim 10, **characterized in that**, instead of the reversing valve (128), a separate constant-pressure control valve (160) in the form of a 3/3-way proportional valve (161) with two inlets (162, 163) and one outlet (164) with outlet pressure control (165) is connected upstream of the common flow-control valve (127), in which 3/3-way proportional valve (161) a first inlet (162) is connected to the system pressure line (10), a second inlet (163) is connected to the oil sump line (11) and the outlet (164) is connected via a connecting line (166) to the inlet (130) of the common through-flow valve (127), and in which, in a first end position (167) which also acts as a rest position, the system pressure line (10) is connected in an unthrottled manner to the connecting line (166) and the oil sump line (11) is blocked, in a central position (168) the inlets (162, 163) and the outlet (164) are blocked, and in a second end position (169) the connecting line (166) is connected in an unthrottled manner to the oil sump line (11) and the system pressure line (10) is blocked, and **in that** the outlet of the common pressure-control valve (127) is connected via a branched supply line (170) directly to the second connection (108) of the first actuating cylinder (104) and to the second connection (109) of the second actuating cylinder (105).

14. Control device according to any one of Claims 1 to 13, **characterized in that** at least one control branch (9, 9') is provided on the inlet side with a shut-off valve (172, 172') for activation and deactivation thereof.

15. Control device according to Claim 14, **characterized in that** the shut-off valve (172) is in the form of a 3/2-way on-off valve (173) with two inlets (174, 175) and one outlet (176), in which 3/2-way on-off valve (173) a first inlet (174) is connected to the system pressure line (10), a second inlet (175) is connected to the oil sump line (11) and the outlet (176) is connected to a pressure line (177) of the control branch (9), and in which, in a rest position (178), the pressure line (177) is connected to the oil sump line (11) and in an operating position (179) the system pressure line (10) is connected to the pressure line (177).

## Revendications

1. Dispositif de commande hydraulique d'une boîte de vitesses à double embrayage qui se compose de deux boîtes de vitesses partielles ayant chacune un embrayage moteur pouvant être fermé activement et plusieurs vitesses pouvant être commutées par le biais d'embrayages de changement de vitesses à synchronisation à verrouillage, le dispositif de commande comprenant un dispositif d'alimentation en pression avec une conduite de pression de système et une conduite de carter d'huile, et à chaque fois, pour chacune des deux boîtes de vitesses partielles, un branchement de commande connecté au dispositif d'alimentation en pression, avec des entraînements de commande hydrauliques, à savoir un module de commande d'embrayage et plusieurs modules de commande de vitesse, et des soupapes de commande magnétiques associées aux entraînements de commande, et une soupape de débit (26, 26', 27, 28, 27', 28') étant à chaque fois montée directement en amont des modules de commande d'embrayage (23, 23') et des modules de commande de vitesse (24, 25, 24', 25'), **caractérisé en ce qu'**une soupape de régulation de la pression commune (29, 29') est montée dans au moins l'un des branchements de commande (9, 9') en amont des soupapes de débit (26, 26', 27, 28, 27', 28'), la soupape de régulation de la pression commune (29) étant réalisée sous la forme d'une soupape proportionnelle à 3/3 voies (30) avec deux entrées (31, 32) et une sortie (33) avec une régulation de la pression de sortie (34), une première entrée (31) étant en liaison avec la conduite de pression du système (10), une deuxième entrée (32) étant en liaison avec la conduite de carter d'huile (11), et la sortie (33) étant en liaison, par le biais d'une conduite d'amenée ramifiée (35), avec les soupapes de débit (26, 27, 28), la conduite d'amenée (35) étant connectée à la conduite de carter d'huile (11) sans étranglement dans une première position d'extrémité (36) servant aussi de position de repos, et la conduite de pression du système (10) étant bloquée, dans une position intermédiaire (37), les entrées (31, 32) et la sortie (33) étant bloquées, et dans une deuxième position d'extrémité (38), la conduite de pression du système (10) étant connectée sans étranglement à la conduite d'amenée (35) et la conduite de carter d'huile (11) étant bloquée.

2. Dispositif de commande selon la revendication 1, **caractérisé en ce que**, lorsque l'on utilise un cylindre de commande (39) à simple effet avec un raccord unique (40) en tant que module de commande d'embrayage (23), la soupape de débit associée (26) est réalisée sous la forme d'une soupape proportionnelle à 3/3 voies (41) avec deux entrées (42, 43) et une sortie (44), une première entrée (42) étant en liaison, par le biais de la conduite d'amenée (35), avec la sortie (33) de la soupape de régulation de la pression (29), une deuxième entrée (43) étant en liaison avec la conduite de carter d'huile (11) et la sortie (44) étant en liaison, par le biais d'une conduite de raccordement (45), avec le raccord (40) du cylindre de commande (39), et, dans une première position d'extrémité (46) servant également de position de repos, la conduite de raccordement (45) étant connectée sans étranglement à la conduite de carter d'huile (11) et la conduite d'amenée (35) étant bloquée, dans une position intermédiaire (47), les entrées (42, 43) et la sortie (44) étant bloquées, et dans une deuxième position d'extrémité (48), la conduite d'amenée (35) étant connectée sans étranglement à la conduite de raccordement (45) et la conduite de carter d'huile (11) étant bloquée.

3. Dispositif de commande selon l'une quelconque des revendications 1 ou 2, **caractérisé en ce que** lors de l'utilisation d'un cylindre de commande à surfaces différentielles à double effet (49, 50) avec un raccord de petite surface (51, 52) et un raccord de grande surface (53, 54) en tant que module de commande de vitesse (24, 25), le raccord de petite surface (51, 52) est en liaison, par le biais de la conduite d'amenée (35), avec la sortie (33) de la soupape de régulation de la pression (29) et la soupape de débit associée (27, 28) est réalisée sous forme de soupape proportionnelle à 3/3 voies (55, 56) avec deux entrées (57, 58, 59, 60) et une sortie (61, 62), une première entrée (57, 58) étant en liaison, par le biais de la conduite d'amenée (35), avec la sortie (33) de la soupape de régulation de la pression (29), une deuxième entrée (59, 60) étant en liaison avec la conduite de carter d'huile (11), et la sortie (61, 62) étant en liaison, par le biais d'une conduite de raccordement (63, 64), avec le raccord de grande surface (53, 54) du cylindre de commande (49, 50), et, dans une première position d'extrémité (65, 66) servant aussi de position de repos, la conduite de raccordement (63, 64) étant connectée sans étranglement à la conduite de carter d'huile (11) et la conduite d'amenée (35) étant bloquée, dans une position intermédiaire (67, 68), les entrées (57, 58, 59, 60) et la sortie (61, 62) étant bloquées, et dans une deuxième position d'extrémité (69, 70), la conduite d'amenée (35) étant connectée sans étranglement à la conduite de raccordement (63, 64) et la conduite de carter d'huile (11) étant bloquée.

4. Dispositif de commande selon l'une quelconque des revendications 1 ou 2, **caractérisé en ce que** lorsque l'on utilise un cylindre de commande synchrone à double effet (104, 105) avec deux raccords (106, 107, 108, 109) en tant que module de commande de vitesse (24, 25), la soupape de débit associée (27, 28) est réalisée sous forme de soupape proportionnelle à 4/3 voies (110, 111) avec deux entrées (112, 113, 114, 115) et deux sorties (116, 117, 118, 119), une première entrée (112, 113) étant en liaison, par le biais de la conduite d'amenée (35), avec la sortie (33) de la soupape de régulation de la pression (29), une deuxième entrée (114, 115) étant en liaison avec la conduite de carter d'huile (11), une première sortie (116, 117) étant en liaison, par le biais d'une première conduite de raccordement (120, 121), avec un premier raccord (106, 107) du cylindre de commande (104, 105), et une deuxième sortie (118, 119) étant en liaison, par le biais d'une deuxième conduite de raccordement (122, 123), avec un deuxième raccord (108, 109) du cylindre de commande (104, 105), et, dans une première position d'extrémité (124) servant également de position de repos, la conduite d'amenée (35) étant connectée sans étranglement à la première conduite de raccordement (120, 121) et la deuxième conduite de raccordement (122, 123) étant connectée sans étranglement à la conduite de carter d'huile (11), dans une position intermédiaire (125), les entrées (112, 113, 114, 115) et les sorties (116, 117, 118, 119) étant bloquées, et dans une deuxième position d'extrémité (126), la conduite d'amenée (35) étant connectée sans étranglement à la deuxième conduite de raccordement (122, 123) et la première conduite de raccordement (120, 121) étant connectée sans étranglement à la conduite de carter d'huile (11).

5. Dispositif de commande selon l'une quelconque des revendications 1 à 4, **caractérisé en ce que** l'on associe aux modules de commande de vitesse (24, 25, 24', 25') dans au moins l'un des branchements de commande (9, 9'), une soupape de débit commune (71, 71'), et **en ce qu'**une soupape d'inversion (72, 72') est montée en amont ou en aval de la soupape de débit commune (71, 71') pour changer le module de commande de vitesse actif (24, 25, 24', 25') et/ou pour inverser le sens de déplacement du module de commande de vitesse actif (24, 25, 24', 25').

6. Dispositif de commande selon la revendication 5, **caractérisé en ce que** pour le changement du module de commande de vitesse actif (24, 25, 24', 25'), on monte en amont de chaque module de commande de vitesse (24, 25, 24', 25') une soupape de commutation de blocage séparée (91, 92, 91', 92') au lieu d'une soupape d'inversion (72, 72') montée en aval.

7. Dispositif de commande selon les revendications 3 et 5, **caractérisé en ce que** lorsque l'on utilise deux modules de commande de vitesse (24, 25) dans l'un des branchements de commande (9), les raccords de petite surface (51, 52) des cylindres de commande (49, 50) sont en liaison, par le biais de la conduite d'amenée (35), directement avec la sortie (33) de la soupape de régulation de la pression commune (29), et une soupape d'inversion (72) est montée en aval de la soupape de débit commune (71) pour changer le module de commande de vitesse actif (24, 25), laquelle est réalisée sous la forme d'une soupape de commutation à 3/3 voies (81) avec une entrée (82) et deux sorties (83, 84), l'entrée (82) étant connectée, par le biais d'une conduite de connexion (85), à la sortie (76) de la soupape de débit (71), une première sortie (83) étant connectée, par le biais d'une première conduite de raccordement (86) au raccord de grande surface (53) du premier cylindre de commande (49), et une deuxième sortie (84) étant connectée, par le biais d'une deuxième conduite de raccordement (87), au raccord de grande surface (54) du deuxième cylindre de commande (50), et, dans une première position d'extrémité (88), la conduite de connexion (85) étant connectée à la première conduite de raccordement (86) et la deuxième conduite de raccordement (87) étant bloquée, dans une position intermédiaire (89), l'entrée (82) et les sorties (83, 84) étant bloquées, et dans une deuxième position d'extrémité (90), la conduite de connexion (85) étant connectée à la deuxième conduite de raccordement (87) et la première conduite de raccordement (86) étant bloquée.

8. Dispositif de commande selon les revendications 6 et 7, **caractérisé en ce que** lorsque l'on utilise plusieurs modules de commande de vitesse (24, 25) dans l'un des branchements de commande (9) pour changer le module de commande de vitesse actif (24, 25), on monte en amont de chacun des modules de commande de vitesse (24, 25), une soupape de commutation de blocage (91, 92) avec une entrée (93, 94) et une sortie (95, 96) au lieu d'une soupape d'inversion (72), l'entrée (93, 94) étant à chaque fois connectée par le biais d'une conduite de connexion (97) à la sortie (76) de la soupape de débit commune (71) et la sortie (95, 96) étant connectée par le biais d'une conduite de raccordement (98, 99) au raccord de grande surface (53, 54) du cylindre de commande associé (49, 50), et dans une position de base (100, 101), l'entrée (93, 94) et la sortie (95, 96) étant bloquées, et dans une position d'actionnement (102, 103), la conduite de connexion (97) étant connectée à la conduite de raccordement (98, 99).

9. Dispositif de commande selon la revendication 6 ou 8, **caractérisé en ce que** les soupapes de commutation de blocage (91, 92, 91', 92') sont réalisées sous forme de soupapes à siège.

10. Dispositif de commande selon les revendications 4 et 5, **caractérisé en ce que** lorsque l'on utilise deux modules de commande de vitesse (24, 25) dans l'un des branchements de commande (9), la soupape de débit commune (127) est réalisée sous la forme d'une soupape proportionnelle à 3/3 voies (129), avec une entrée (130) et deux sorties (131, 132), une première sortie, (131) étant connectée par le biais d'une première conduite de raccordement (133) au premier raccord (106) du premier cylindre de commande (104) et une deuxième sortie (132) étant connectée par le biais d'une deuxième conduite de raccordement (134) au premier raccord (107) du deuxième cylindre de commande (105), et dans une première position d'extrémité (135) servant également de position de base, l'entrée (130) étant connectée sans étranglement à la première conduite de raccordement (133) et la deuxième conduite de raccordement (134) étant bloquée, dans une position intermédiaire (136) l'entrée (130) et les sorties (131, 132) étant bloquées, et dans une deuxième position d'extrémité (137), l'entrée (130) étant connectée sans étranglement à la deuxième conduite de raccordement (134) et la première conduite de raccordement (133) étant bloquée, et **en ce que** l'on monte, en amont de la soupape de débit commune (127), une soupape d'inversion (128) pour inverser le sens de déplacement, laquelle est réalisée sous la forme d'une soupape de commutation à 4/2 voies (138) avec deux entrées (139, 140) et deux sorties (141, 142), une première entrée (139) étant en liaison, par le biais de la conduite d'amenée (35), avec la sortie (33) de la soupape de régulation de la pression commune (29), une deuxième entrée (140) étant en liaison avec la conduite de carter d'huile (11), une première sortie (141) étant en liaison, par le biais d'une conduite de connexion (143), à l'entrée (130) de la soupape de débit commune (127), et une deuxième sortie (142) étant en liaison, par le biais d'une conduite de raccordement ramifiée (144), avec le deuxième raccord (108) du premier cylindre de commande (104) et avec le deuxième raccord (109) du deuxième cylindre de commande (105), et dans une position de base (145), la conduite d'amenée (35) étant connectée à la conduite de connexion (143) et la conduite de raccordement (144) étant connectée à la conduite de carter d'huile (11), et dans une position d'actionnement (146), la conduite de connexion (143) étant connectée à la conduite de carter d'huile (11) et la conduite d'amenée (35) étant connectée à la conduite de raccordement (144).

11. Dispositif de commande selon la revendication 10, **caractérisé en ce que** lorsque l'on utilise plusieurs modules de commande de vitesse (24, 25) dans l'un des branchements de commande (9) pour commander et changer le module de commande de vitesse actif (24, 25), on monte en amont de chaque module de commande de vitesse (24, 25) à chaque fois une soupape de commutation de débit à 2/2 voies séparée (147, 148) avec une entrée (149, 150) et une sortie (151, 152) au lieu de la soupape de débit commune (127), à chaque fois l'entrée (149, 150) étant connectée par le biais d'une conduite de connexion (153) à la première sortie (141) de la soupape d'inversion (128) et la sortie (151, 152) étant connectée par le biais d'une conduite de raccordement (154, 155) au premier raccord (106, 107) du cylindre de commande associé (104, 105), et dans une position de repos (156, 157), l'entrée (149, 150) et la sortie (151, 152) étant bloquées et dans une position de fonctionnement (158, 159), la conduite de connexion (153) étant connectée à la conduite de raccordement (154, 155).

12. Dispositif de commande selon la revendication 11, **caractérisé en ce que** les soupapes de commutation de débit (147, 148, 147', 148') sont réalisées sous forme de soupapes à siège temporisées.

13. Dispositif de commande selon la revendication 10, **caractérisé en ce qu'**au lieu de la soupape d'inversion (128), on monte en amont de la soupape de débit commune (127) une soupape de régulation constante de la pression séparée (160) qui est réalisée sous la forme d'une soupape proportionnelle à 3/3 voies (161), avec deux entrées (162, 163) et une sortie (164) avec une régulation de la pression de sortie (165), une première entrée (162) étant en liaison avec la conduite de pression du système (10), une deuxième entrée (163) étant en liaison avec la conduite de carter d'huile (11), et la sortie (164) étant en liaison, par le biais d'une conduite de connexion (166), avec l'entrée (130) de la soupape de débit commune (127), et dans une première position d'extrémité (167) servant également de position de repos, la conduite de pression du système (10) étant connectée sans étranglement à la conduite de connexion (166) et la conduite de carter d'huile (11) étant bloquée, dans une position intermédiaire (168) les entrées (162, 163) et la sortie (164) étant bloquées, et dans une deuxième position d'extrémité (169) la conduite de connexion (166) étant connectée sans étranglement à la conduite de carter d'huile (11) et la conduite de pression du système (10) étant bloquée, et **en ce que** la sortie de la soupape de régulation de la pression commune (127) est en liaison par le biais d'une conduite de raccordement ramifiée (170), directement avec le deuxième raccord (108) du premier cylindre de commande (104), et avec le deuxième raccord (109) du deuxième cylindre de commande (105).

14. Dispositif de commande selon l'une quelconque des revendications 1 à 13, **caractérisé en ce qu'**au moins un branchement de commande (9, 9') pour l'activation et la désactivation est pourvu d'une soupape de coupure (172, 172') du côté de l'entrée.

15. Dispositif de commande selon la revendication 14, **caractérisé en ce que** la soupape de coupure (172) est réalisée sous la forme d'une soupape de commutation à 3/2 voies (173), avec deux entrées (174, 175) et une sortie (176), une première entrée (174) étant en liaison avec la conduite de pression du système (10), une deuxième entrée (175) étant en liaison avec la conduite de carter d'huile (11), et la sortie (176) étant en liaison avec une conduite de pression (177) du branchement de commande (9), dans une position de repos (178), la conduite de pression (177) étant connectée à la conduite de carter d'huile (11) et dans une position de fonctionnement (179), la conduite de pression du système (10) étant connectée à la conduite de pression (177).
